# EUROPÄISCHE PATENTSCHRIFT

(11) **EP 4 007 990 B1**
(45) Veröffentlichungstag und Bekanntmachung des Hinweises auf die Patenterteilung: **16.07.2025**
(21) Anmeldenummer: 19778822.7
(22) Anmeldetag: 11.09.2019
(51) Int. Cl.: G06T 7/00

(54) **VERFAHREN ZUR ANALYSE VON BILD-INFORMATIONEN MIT ZUGEORDNETEN SKALAREN WERTEN**
METHOD FOR THE ANALYSIS OF IMAGE INFORMATION WITH ASSOCIATED SCALAR VALUES
MÉTHODE D'ANALYSE DES INFORMATIONS D'IMAGE AVEC VALEURS SCALAIRES ASSOCIÉES

(43) Veröffentlichungstag der Anmeldung: 08.06.2022
(73) Patentinhaber: Siemens Aktiengesellschaft, 80333 München (DE)
(72) Erfinder: WITT, Jonas, 96050 Bamberg (DE)
(74) Vertreter: Siemens Patent Attorneys
(86) Internationale Anmeldenummer: PCT/EP2019/074240
(87) Internationale Veröffentlichungsnummer: WO 2021/047770

(56) Entgegenhaltungen:
- WO-A1-98/07100
- US-A1- 2018 293 722
- US-A1- 2018 293 723
- US-B1- 8 547 428
- OLSSON L J ET AL: "WEB PROCESS INSPECTION USING NEURAL CLASSIFICATION OF SCATTERING LIGHT", IEEE TRANSACTIONS ON INDUSTRIAL ELECTRONICS, IEEE SERVICE CENTER, PISCATAWAY, NJ, USA, vol. 40, no. 2, April 1993 (1993-04-01), pages 228 - 234, XP000387382, ISSN: 0278-0046, DOI: 10.1109/41.222644

## Beschreibung

Die vorliegende Erfindung betrifft ein Verfahren zur Analyse von Bild-Informationen oder akustischen Informationen mit zugeordneten skalaren Werten, umfassend die Verfahrensschritte, a.) Erfassen eines ersten Bildes oder einer ersten akustischen Information bezüglich eines Gegenstands oder einer Situation und Erfassen mindestens eines ersten skalaren Sensorwerts bezüglich des Gegenstands oder der Situation, b.) Erfassen eines zweiten Bildes oder einer zweiten akustischen Information bezüglich des Gegenstands oder der Situation und Erfassen mindestens eines zweiten skalaren Sensorwerts bezüglich des Gegenstands oder der Situation.

Derartige Verfahren sind aus dem Stand der Technik bekannt. So offenbart beispielsweise die US-Veröffentlichungsschrift US 2017/0032281 A1 ein Verfahren zum Überwachen eines Schweiß-Systems, bei welchem verschiedenste Sensor- oder Bild-Daten erfasst werden, um damit ein neuronales Netz anzulernen. Weiterhin offenbart diese Offenlegungsschrift ein Verfahren, bei welchem mit Hilfe des angelernten neuronalen Netzes und unter Verwendung von im Rahmen eines Schweiß-Ablaufs aufgenommenen Bild- oder Sensordaten eine Charakteristik der erzeugten Schweißnaht bzw. des Schweiß-Prozesses vorhergesagt wird.

Aus der US-Veröffentlichungsschrift US 2018/0293723 Al ist beispielsweise ein Verfahren zur Erkennung von Anomalien in Rohrleitungen bekannt, bei dem mehrere Bildmerkmale aus Zeitreihendaten extrahiert werden, die von mehreren in einer Rohrleitung installierten Sensoren gemessen werden.

Die US-Veröffentlichungsschrift US 2018/0293722 A1 offenbart ein Verfahren zur Auswertung von Bilddaten im Rahmen der optischen Inspektion von Bildsensoren. Dabei werden Defekt-Karten erstellt und x-y Koordinaten der AOI-Daten und elektrischen Daten identifiziert, um Korrelationen zu finden. Das US-Patent 8,547,428 B1 offenbart ein Inspektions-System für eine Rohrleitung, welches während der Inspektion eine 2- oder 3-dimensionale Karte der Rohrleitung erstellt. Weiterhin offenbart die PCT Offenlegungsschrift WO 98/07100 ein Verfahren zur Auswahl von Trainingsdaten für ein neuronales Netz, bei welchem zu einem Trainingsdatenvektor ein Informationsgehalt ermittelt wird. Übersteigt der Informationsgehalt einen bestimmten Schwellwert, dann wird der Vektor zum Training eines entsprechenden neuronalen Netzes verwendet.

Zudem ist aus dem Artikel "Web Process Inspection Using Neural Classification of Scattering Light" (Olsson et al., IEEE Transactions on Industrial Electronics, Bd. 40, Nr. 2, April 1993, Seiten 228-234, XP000387382) ein Sensorsystem sowie ein Verfahren zur Erkennung von Fehlern in einem Gewebe unter Verwendung eines neuronalen Netzes bekannt.

Es ist ein Nachteil des genannten Standes der Technik, dass die Erstellung und Verwendung eines neuronalen Netzes sehr aufwendig ist. Sowohl das Erstellen und Einrichten, aber insbesondere auch das Training des neuronalen Netzes ist aufwendig und benötigt eine große Zahl von Trainingsdaten, um zuverlässig zu funktionieren. Solche Trainingsdaten sind oft nicht vorhanden, zumindest nicht in ausreichender Zahl.

Daher ist es eine Aufgabe der vorliegenden Erfindung, ein Verfahren zur Analyse von Sensordaten zur Verfügung zu stellen, mit welchem sich u.a. auch komplexere Sensor-Daten mit verringertem Aufwand analysieren lassen.

Diese Aufgabe wird gelöst durch ein Verfahren mit den Merkmalen des Patentanspruch 1.

Ein solches Verfahren ist zur Analyse von Bild-Informationen mit zugeordneten skalaren Werten ausgebildet und eingerichtet und umfasst die Verfahrensschritte,
a.) Erfassen eines ersten Bildes eines Gegenstands oder einer Situation und Erfassen mindestens eines ersten skalaren Sensorwerts bezüglich des Gegenstands oder der Situation,
b.) Erfassen eines zweiten Bildes des Gegenstands oder der Situation und Erfassen mindestens eines zweiten skalaren Sensorwerts bezüglich des Gegenstands oder der Situation,
c.) Einbringen des ersten Bilds und des mindestens einen ersten skalaren Sensorwerts als konsistente Repräsentationsform in eine erste Datenstruktur, und
   Einbringen des zweiten Bilds und des mindestens einen zweiten skalaren Sensorwerts als konsistente Repräsentationsform in eine zweite Datenstruktur,
d.) Vergleichen der ersten und zweiten Datenstruktur, und e.) Ausgabe einer Information, wenn der Vergleich einen Unterschied ergibt, der einem vorgegebenen oder vorgebbaren Kriterium entspricht.

Durch das Erstellen der konsistenten Repräsentationsform der entsprechenden Datenstrukturen wird es möglich, sowohl Bildinformation als auch zugehörige skalare Information innerhalb einer konsistenten Darstellungsform bzw. Datenstruktur zusammenzufassen und so völlig neuartige Mechanismen durch Vergleich zweier oder mehrerer solcher Datenstrukturen zu ermöglichen. Damit lassen sich auch komplexere Sensordaten analysieren, ohne unbedingt auf Auswertungen vermittels neuronaler Netze zurückgreifen zu müssen.

Zwar können in einer möglichen Ausgestaltung der Vergleich der ersten und zweiten Datenstruktur oder auch die Prüfung, ob ein vorgegebenes oder vorgebbares Kriterium erfüllt ist, nicht nur manuell oder mit automatisierten analytischen Methoden, sondern auch unter Verwendung eines neuronalen Netzes geschehen. Ein solches neuronales Netz wäre aber möglicherweise durchaus einfacher in der Ausgestaltung und dem Training als ein neuronales Netz, welches unmittelbar zur Analyse der Bild- und Sensordaten benötigt würde.

Dabei kann ein skalarer Wert beispielsweise ein alphanumerischer Wert, eine alphanumerische Zeichenkette, ein Integer-Zahlenwert, ein Fließkomma-Zahlenwert, ein Boolescher-Wert, ein String-Wert oder ähnlicher Wert sein. Skalare Werte stellen in gewisser Weise 0-dimensionale Wert-Anordnungen dar - im Gegensatz zu Vektoren, die 1-dimensionale Wert-Anordnungen darstellen und Matrizen, die 2-dimensionale oder auch noch höher-dimensionale Wert-Anordnungen darstellen.

Bild-Informationen bzw. Bilder im Sinne der vorliegenden Beschreibung werden als Matrizen betrachtet, d.h. bei einem Bild handelt es sich um einen Matrix-artig ausgebildeten Wert, wobei die einzelnen Elemente eines Bildes beispielsweise seine Pixel sind, die durch eine Lage in zwei oder mehr Dimensionen und ein oder mehrere Helligkeits- und/oder Farbwerte charakterisiert sein können.

Die erfassten Bilder können dabei jeweils beispielsweise als 2-dimensionale oder höher-dimensionale Pixel- oder Vektor-Grafik ausgebildet und eingerichtet sein.

Bildinformationen bzw. Bilder können auch mehr als zwei Dimensionen aufweisen, indem beispielsweise einer zweidimensionalen Bildebene weitere zweidimensionale Informationsebenen quasi überlagert werden. So kann beispielsweise einem zweidimensionalen Graustufen-, Helligkeitswerts und/oder Farbwerts-Pixel-Bild eine weitere Ebene überlagert werden, in welcher den einzelnen Pixeln beispielsweise Materialdichte-Werte, Röntgeninformationswerte oder ähnliche weitere Eigenschaftswerte zugeordnet werden.

Die Erfassung des ersten bzw. zweiten Bildes kann beispielsweise mit jeder Art von geeigneter Kamera erfolgen. Die Aufnahme kann beispielsweise in verschiedenen optischen Frequenzbereichen erfolgen, wie beispielsweise im sichtbaren Bereich, im Infrarotbereich, im ultravioletten Bereich und/oder im Röntgenbereich oder einem sonstigen geeigneten Spektralbereich. Dabei können jeweils geeignete Bilderfassungsverfahren und -Geräte bzw. -Kameras zur Erfassung verwendet werden. Weiterhin können Bilder auch über weitere geeignete Bilderfassung-verfahren wie beispielsweise Thermographie-verfahren (d. h. Verfahren zur zweidimensionalen Temperaturerfassung), MRI-Verfahren (Magnetic Resonanz Imaging), Röntgen-Strukturanalyse-Verfahren oder sonstiger Verfahren erfasst werden, welche geeignet sind ein zweidimensionales Pixel- oder Vektor-Bild zu erzeugen.

Weiterhin können die Bilder auch beispielsweise durch einen Scanner, eine Bildschirmkopie (=Digitales Abbild einer auf einem Bildschirm, Display oder Monitor angezeigten 2-dimensionalen Darstellung) oder auf vergleichbare Weise erfasst werden.

Das erste und zweite Bild können beispielsweise zeitlich aufeinanderfolgende Bilder einer Situation oder eines Gegenstands sein.

Weiterhin können das erste und zweite Bild auch ein zu einem bestimmten Zeitpunkt aufgenommenes Bild eines Gegenstands oder einer Situation sowie ein entsprechendes Referenz-Bild dieses Gegenstands oder der Situation sein. Ein solches Referenz-Bild kann beispielsweise eine Ursprungs-, Soll- oder Wunsch-Ausgestaltung des Gegenstands oder der Situation darstellen.

Ein Bild einer Situation kann beispielsweise ein Bild eines bestimmten Raumbereichs oder auch einer bestimmten logischen Situation sein. Logische Situationen können z.B. durch bestimmte Kriterien oder auslösende Merkmale oder Vorkommnisse charakterisiert sein. So kann beispielsweise im Rahmen eines Verfahrensablaufs oder einer Herstellung eines bestimmten Produkts ein bestimmter Verfahrensschritt oder Produktionsschritt oder das Ergebnis eines bestimmten Verfahrensschritts bzw. Produktionsschritts (z.B. ein Zwischen- oder Endprodukt oder -Ergebnis) eine solche logische Situation sein.

Eine Situation kann beispielsweise auch durch einen geographischen Ort und/oder weitere charakterisierende Eigenschaften wie beispielsweise eine Uhrzeit, ein Zeitbereich, bestimmte Helligkeitswerte, bestimmte erfasste Sensordaten wie Temperaturen, Personenerkennung, oder ähnliche Eigenschaften gegeben sein.

So kann eine Situation beispielsweise eine bestimmte Situation im Straßenverkehr, beispielsweise gegeben durch einen bestimmten Ort und Raumwinkel sein, oder auch eine Produktions-Situation, gegeben durch eine bestimmte Produktions-Maschine oder einen bestimmten Produktionsschritt. Eine Situation kann weiterhin beispielsweise auch gegeben sein durch einen entsprechenden Verfahrensablauf, beispielsweise einen Verbrennungsvorgang, einen Transportvorgang, einer Interaktion zwischen verschiedenen Personen oder ähnlichen Abläufen.

Gegenstände können jede Art von mittels optischer oder sonstiger Sensoren erfassbaren Gegenständen, Vorrichtungen, Anlagen, Maschinen, Lebewesen oder sonstige dingliche Gegenstände sein.

Ein Sensorwert kann ein von einem auf den Produktionsablauf bezogenen Sensor zur Erfassung einer physikalischen Größe, Materialeigenschaft, chemischen Eigenschaft, Kennungs-Information oder sonstigen Information bezüglich des im Produktionsablauf befindlichen Produkts oder der Produktionsanlage oder Teilen davon sein.

Dabei kann ein skalarer Sensorwert jede Art von skalarem Wert sein, beispielsweise ein numerischer Wert, ein alphanumerischer Wert, eine alphanumerische Zeichenkette, ein Integer-Zahlenwert, ein Fließkomma-Zahlenwert, ein Boolescher-Wert, ein String-Wert oder ähnlicher Wert.

Ein skalarer Sensorwert kann beispielsweise eine Zahl, ein oder mehrere Buchstaben oder Wörter oder ein sonstiges alphanumerisches Datum sein. Dabei kann der Sensorwert von einem entsprechenden Sensor ausgegeben werden.

Die Erfassung mindestens eines skalaren Sensorwertes kann dabei derart ausgebildet und eingerichtet sein, dass entweder nur ein skalarer Sensorwert erfasst wird.

Weiterhin können als der mindestens eine skalare Sensorwert auch mehrere Werte, von einem Sensor zu verschiedenen Zeitpunkten geliefert, erfasst werden (z.B. eine sogenannte "Zeitreihe"). Dabei können im Rahmen der Erstellung der jeweiligen Datenstruktur dann z.B. einer, einzelne oder alle dieser Werte verwendet werden oder auch z.B. ein Mittelwert aus allen bzw. einzelnen dieser Werte.

Der mindestens eine erste und zweite skalare Sensorwert kann jeweils z.B. auch verschiedene Aspekte oder Teile des Gegenstands oder der Situation betreffen (z.B. Temperaturen an unterschiedlichen Stellen eines Gegenstands). Wurden z.B. als der mindestens eine erste oder zweite Sensorwert mehrere Sensorwerte erfasst, können im Rahmen der Erstellung der jeweiligen Datenstruktur dann z.B. einer, einzelne oder alle dieser Werte verwendet werden oder auch z.B. ein Mittelwert aus mehreren oder allen Werten.

Dass sich sowohl ein Bild als auch mindestens ein skalarer Sensorwert auf denselben Gegenstand beziehen kann beispielsweise bedeuten, dass sowohl das Bild als auch der mindestens eine skalare Sensorwert zumindest einen Teilbereich des Gegenstands betreffen, wobei der Teilbereich bezüglich des Bildes sich vom Teilbereich bezüglich des Sensorwerts unterscheiden kann. So kann beispielsweise das Bild von einem ersten Teil eines Gegenstands erfasst werden und ein entsprechender Sensorwert, beispielsweise ein Temperaturwert, an einem anderen Teil dieselben Gegenstands aufgenommen werden.

Dass sich sowohl ein Bild als auch mindestens ein skalarer Sensorwert auf dieselbe Situation beziehen, kann beispielsweise bedeuten, dass sich ein entsprechender Sensorwert beispielsweise auf einen Gegenstand und/oder Raumbereich bezieht, welche auf dem erfassten Bild enthalten ist oder zumindest teilweise enthalten ist. So kann beispielsweise, wenn die Situation einer bestimmten Straßenverkehrs-Situation entspricht, ein Sensorwert beispielsweise einer Lufttemperatur der im aufgenommenen Bereich vorhandenen Luft sein oder auch ein Helligkeitswert, der innerhalb des aufgenommenen Bereiches erfasst wurde. Weiterhin kann der Sensorwert auch logisch einer Situation zugeordnet sein, indem beispielsweise einer entsprechenden Verkehrssituation eine zum Zeitpunkt der Aufnahme herrschende Uhrzeit als Sensorwert zugeordnet wird.

Am Beispiel einer Produktionsüberwachung können beispielsweise die Bildinformationen bezogen auf ein Zwischenprodukt sein und die zugehörigen Sensorwerte sich auf den zum Zwischenprodukt führenden Produktionsschritt beziehen (zum Beispiel eine Temperatur bzw. ein Temperaturverlauf während des Herstellungsschritts oder eine Wickelgeschwindigkeit bei der Herstellung einer gewickelten Mehrlagen-Schichtbatterie). Ein solches "Zwischenprodukt" ist ebenfalls ein Beispiel für eine Situation im Sinne der vorliegenden Beschreibung. So würde dann beispielsweise ein erstes Bild von einem ersten Zwischenprodukt mit dieses erste Zwischenprodukt betreffenden Sensorwerten erfasst werden, und ein zweites Bild von einem zweiten Zwischenprodukt zusammen mit den das zweite Zwischenprodukt betreffenden Sensorwerten.

Weiterhin können im Rahmen einer Produktionsüberwachung beispielsweise Bilder von einem bestimmten Anlagenteil bzw. einer bestimmten Produktionsmaschine erfasst werden und entsprechende Sensorwerte von Sensoren dieser Maschine bzw. dieses Anlagenteils.

Entsprechende Situationen können beispielsweise auch die Überwachung eines Fahrzeugs, insbesondere eines selbstfahrenden Fahrzeugs, betreffen. So kann beispielsweise eine am oder im Fahrzeug befindliche Kamera ein bestimmtes Umgebungsbild erfassen und die entsprechenden Sensorwerte Umgebungsparameter der erfassten Umgebung sein, beispielsweise ein Feuchtigkeitswert einer Fahrbahn, Wetter- bzw. Klimainformationen, Messparameter bezüglich von Gegenständen oder Personen im Umfeld, eine Temperatur, eine Tageszeit, usw.. Weiterhin können diesbezüglich Sensorparameter beispielsweise auch durch Text- oder Schriftanalyse aus dem aufgenommenen Bild entnommene Informationen sein, wie beispielsweise eine Beschriftung eines Straßen- und/oder Verkehrsschildes.

Entsprechende Gegenstände und/oder Situationen können auch dem Bereich der medizinischen Diagnostik, der Werkstoffprüfung oder weiterer Anwendungen von Bildauswerteverfahren entstammen. So können beispielsweise im Rahmen einer medizinischen Diagnostik einem erfassten Bild Sensorwerte bezüglich Blutwerten eines Patienten, dessen Körpertemperatur, akustischen Parametern (z. B. Bezüglich Atemgeräuschen, Hust-Geräuschen oder ähnlichem) zugeordnet sein.

Ganz allgemein wird unter einer Datenstruktur im Zusammenhang mit der vorliegenden Beschreibung eine Repräsentation von Informationen in einem Rechner oder einer entsprechenden elektronischen Speichereinrichtung ("in Bits oder Bytes") verstanden. Dies entspricht auch der Definition des Begriffs "Datenstruktur" in der Informatik.

Dabei bedeutet das Einbringen des jeweiligen Bildes und des entsprechenden jeweiligen mindestens einen Sensorwerts als konsistente Repräsentationsform in eine erste Datenstruktur beispielsweise, dass die jeweiligen Datensätze jeweils derart ausgebildet und eingerichtet sind, dass alle in der jeweiligen Datenstruktur enthaltenen Werte durch ein oder mehrere Größen in jeweils einheitlichen Maßstäben charakterisiert sind.

Dabei können die jeweiligen Datenstrukturen z.B. derart ausgebildet und eingerichtet sein, dass alle enthaltenen Werte durch eine Größe in einem einheitlichen Maßstab charakterisiert sind. Derart ausgestaltete Datensätze kann z.B. eine graphische Darstellung als ein Zahlenstrahl, eine lineare Achse oder eine vergleichbare 1-dimensionale Darstellung mit entsprechend darauf eingetragenen Werten zugeordnet sein bzw. entsprechen.

Die Datenstrukturen können weiterhin jeweils auch derart ausgebildet und eingerichtet sein, dass alle enthaltenen Werte durch jeweils zwei Größen in jeweils einem einheitlichen Maßstab charakterisiert sind. Derart ausgestaltete Datenstrukturen können z.B. eine graphischen Darstellung als ein zweidimensionales Diagramm mit zwei jeweils linearen Achsen bzw. zwei den dargestellten Werten entsprechenden Achsen, oder eine vergleichbare 2-dimensionale Darstellung, wie beispielsweise ein Graph, mit entsprechend darin dargestellten Werten zugeordnet sein.

Die Datenstrukturen können weiterhin jeweils auch derart ausgebildet und eingerichtet sein, dass alle enthaltenen Werte durch jeweils drei bzw. mehr Größen in jeweils einem einheitlichen Maßstab charakterisiert sind. Solchen Datensätzen können dann entsprechende 3-dimensionale bzw. höherdimensionale Darstellungen zugordnet sein bzw. entsprechen.

Das Einbringen eines jeweiligen Bildes und eines oder mehrerer Sensorwerten in eine konsistente Repräsentationsform einer Datenstruktur kann beispielsweise zumindest mittels eines nachfolgend beschriebenen Verfahrensablauf erfolgen. So kann beispielsweise ein aufgenommenes Bild in einem ersten Schritt einer entsprechenden Bildverarbeitung unterzogen werden. Eine solche Bildverarbeitung kann neben einer Anpassung entsprechender Farb-, Helligkeits- Kontrast- und ähnlicher Bildparameter auch eine entsprechende Transformation und/oder Verzerrung oder Entzerrung des Bildes umfassen. Eine solche Transformation kann beispielsweise eine räumliche Transformation oder auch eine Transformation beispielsweise in den Frequenzbereich umfassen. Danach kann beispielsweise eine Auswahl bestimmter Bildpunkte und/oder verschiedener Frequenzanteile für ein Einbringen in die Datenstruktur erfolgen oder auch das gesamte Bild in die Datenstruktur eingebracht werden.

Im Rahmen des Einbringens des mindestens einen Sensorwerts in die konsistente Repräsentationsform der Datenstruktur kann beispielsweise ebenfalls als ersten Schritt eine bestimmte Verarbeitung der erfassten Werte, beispielsweise eine Normierung oder eine Anpassung an einen vorgegebenen, der Repräsentationsform zugrunde liegenden Maßstabs umfassen. Nachfolgend können dann die entsprechenden Werte, gegebenenfalls nach einer weiteren Anpassung eines Maßstabs oder an die Repräsentationsform der Datenstruktur entsprechend in die Datenstruktur eingebracht werden.

Auf diese Weise entsteht eine Datenstruktur, die innerhalb einer einheitlichen Repräsentationsform sowohl die Daten des erfassten Bildes als auch die Daten mindestens eines diesbezüglich erfassten Sensorwerts vereinigt.

Der Vergleich der ersten und zweiten Datenstruktur kann beispielsweise erfolgen, in dem einzelne Datenpunkte oder auch sämtliche Datenpunkte der ersten Datenstruktur mit dem entsprechenden zugehörigen Daten der zweiten Datenstruktur verglichen werden. Beispielsweise können dann ermittelte Abweichungen dieser Punkte aufsummiert werden oder auch ein Mittelwert der Abweichungen angegeben bzw. berechnet werden.

Weiterhin kann auch eine bestimmte Segmentierung der jeweiligen Bilder Teil des Vergleichens der Datenstrukturen sein. Auf diese Weise können beispielsweise bestimmte Parameter der einzelnen Segmente des ersten Bildes mit den entsprechenden Parametern der entsprechenden Segmente des zweiten Bildes verglichen werden und gegebenenfalls zugehörige Abweichungen ermittelt werden.

Teil des Vergleichs der ersten und zweiten Datenstruktur kann auch ein Clustering der jeweiligen Datenstrukturen umfassen, wobei dann nachfolgend dem Clustering die ermittelten Clusterstrukturen bezüglich der ersten und zweiten Datenstruktur verglichen werden. Hierauf wird nachfolgend noch näher eingegangen.

Dabei kann Verfahrensschritt e.) beispielsweise derart ausgebildet und eingerichtet sein, dass die ausgegebene Information als eine Warn-Information ausgebildet und eingerichtet ist und das vorgegebene oder vorgebbare Kriterium einem Fehler-Kriterium entspricht.

Ein vorgegebenes oder vorgebbares Kriterium für die Ausgabe einer Information kann sich auf jeden im Rahmen des Vergleichs der ersten und zweiten Datenstruktur ermittelten Vergleichswerte beziehen.

So kann, wie vorstehend schon genannt, als vorgegebenes oder vorgebbares Kriterium beispielsweise eine kumulierte oder durchschnittliche Abweichung von Werten der ersten Datenstruktur von entsprechend zugehörigen Werten der zweiten Datenstruktur sein. Weiterhin können auch bestimmte Grenzwerte im Rahmen der ermittelten Unterschiede bei der Segmentierung der ersten und zweiten Datenstruktur oder auch Unterschiede der ermittelten Cluster-Strukturen der ersten und zweiten Datenstruktur dem vorgegebenen oder vorgebbaren Kriterium für das Ausgeben einer Information entsprechen. So kann beispielsweise ein vorgegebenes oder vorgebbares Kriterium im Rahmen geclusterter erster und zweiter Datenstrukturen sein, dass sich eine ermittelte Anzahl der Cluster bei der ersten und zweiten Datenstruktur unterscheidet oder auch Clusterschwerpunkte zwischen erster und zweiter Datenstruktur sich um mindestens einen bestimmten vorgegebenen Wert unterscheiden.

Die Ausgabe einer Information kann beispielsweise ein Hinweis sein, dass eine entsprechende signifikante Änderung zwischen den jeweils im ersten und zweiten Bild erfassten Situationen oder Gegenständen detektiert wurde. Eine solche Information kann dann beispielsweise ein Hinweis an einen Nutzer sein, die entsprechende Situation, Produktionsanlage, bzw. den entsprechenden Gegenstand zu prüfen o. ä. Prüfungs- bzw. Störungsmaßnahmen auszulösen oder eine entsprechende Information weiterzugeben.

Weiterhin kann die Ausgabe einer Information auch die Ausgabe eines Steuerbefehls oder auch die Ausgabe einer Alarm- oder Steuermeldung sein. Dabei kann der Steuerbefehl bzw. die entsprechende Alarm- oder Steuermeldung beispielsweise an einen entsprechenden Controller, ein Steuergerät, einen Leitrechner, einen Computer oder eine ähnliche Einrichtung weitergeleitet werden, welche beispielsweise automatisch eine entsprechende Aktion auslösen kann.

Ein Verfahren gemäß der vorliegenden Beschreibung kann weiterhin derart ausgebildet und eingerichtet sein,
dass zum Erstellen der ersten und zweiten Datenstruktur das jeweils erfasste Bild jeweils in den Frequenzraum transformiert wird,
insbesondere, dass zum Erstellen der ersten und zweiten Datenstruktur das erfasste Bild jeweils unter Verwendung eines Verfahrens der Fourier-Analyse in den Frequenzraum transformiert wird.

Dabei kann das Verfahren der Fourier-Analyse beispielsweise als eine sogenannte "Diskrete-Fourier-Transformation", eine sogenannte "Fast-Fourier-Transformation" oder auch eine sogenannte "Diskrete-Cosinus-Transformation" (DCT)ausgebildet und eingerichtet sein. Die "Diskrete-Cosinus-Transformation" (DCT) wird beispielsweise auch im Rahmen der sogenannten JPEG-Kompression (JPEG: Joint Photographic Expert Group) für Bilder verwendet und ist daher eine etablierte Methode, Bilder in den Frequenzraum zu transformieren.

Die Frequenztransformation eines Bildes hat den Vorteil, dass durch die Transformation gewisse strukturelle Eigenschaften, wie beispielsweise sich deutlich abhebende Gegenstände, Linienstrukturen, Kanten o. ä., leichter erkennbar werden. Weiterhin ermöglicht es eine Frequenztransformation, eine Bildinformation anhand von Amplitudeninformationen bezüglich eines bestimmten Frequenz-Kamms darzustellen. Durch Darstellung der einzelnen Wellen des Frequenzkamms entlang einer räumlichen Achse lassen sich somit Bildinformationen entlang einer oder mehrerer räumlicher Achsen darstellen, was das Abtragen der Sensorwerte über einzelne räumliche Samplingpunkte innerhalb des Frequenzraums erlaubt. Auf diese Weise lässt sich in vereinfachter Art und Weise eine einheitliche Repräsentationsform der Datenstruktur erreichen.

Ein Verfahren gemäß der vorliegenden Beschreibung kann auch derart ausgebildet und eingerichtet sein,
dass innerhalb Verfahrensschritt a.) weiterhin mindestens ein erster skalarer Parameterwert bezüglich des Gegenstands oder Situation erfasst wird, und
dass innerhalb Verfahrensschritt b.) weiterhin mindestens ein zweiter skalarer Parameterwert bezüglich des Gegenstands oder Situation erfasst wird,
wobei die erste und zweite Datenstruktur weiterhin unter Verwendung des mindestens einen ersten skalaren Parameterwertes beziehungsweise des mindestens einen zweiten Parameterwertes erstellt wird.

Dabei wird im Rahmen des Verfahrensschritt c.) auch der mindestens eine erste Parameterwerte in die konsistente Repräsentationsform der ersten Datenstruktur eingebracht und dafür ggf. auch in die entsprechende Repräsentation transformiert bzw. an diese angepasst. Auf vergleichbare Weise wird auch der mindestens eine zweite Parameterwert in die konsistente Repräsentationsform der zweiten Datenstruktur eingebracht und dafür ggf. auch in die entsprechende Repräsentation transformiert bzw. an diese angepasst.

Auf diese Weise können verschiedenste weitere Sensor- oder sonstige Werte bezüglich des Gegenstands oder der Situation in die entsprechende Analyse eingebracht werden, und so die Analyse verbessert und/oder robuster bzw. empfindlicher gemacht werden - je nach Wahl der Parameter bzw. des Vergleichs- oder Auswerteverfahrens.

Ein Parameterwert kann beispielsweise ein Sensorwert sein, wie beispielsweise ein von einem Sensor, der dem Gegenstand oder der Situation zugeordneten ist, ausgegebener Wert. Ein Parameterwert kann weiterhin auch jeder dem Gegenstand oder der Situation sonst zugeordnete Wert sein. Ein solcher dem Gegenstand oder der Situation zugeordnete Wert kann z.B. Eigenschaften, Zustände, Verhaltensweisen, Kenngrößen oder ähnliche Informationen bezüglich des Gegenstands oder der Situation beschreiben oder betreffen. Skalare Parameterwerte können beispielsweise numerische, alphanumerische, boolesche und/oder String-Werte sein.

Weiterhin kann ein Verfahren gemäß der vorliegenden Beschreibung derart ausgebildet und eingerichtet sein,
dass das Vergleichen der ersten und zweiten Datenstruktur unter Verwendung eines neuronalen Netzes erfolgt.

Dabei kann das neuronale Netz als ein trainiertes neuronales Netz ausgebildet und eingerichtet sein.

Ein Training eines solchen neuronalen Netzes kann dabei derart erfolgen, dass jeweils zu einer Vielzahl von Zusammenstellungen von Bildinformationen mit zugeordneten Sensor- bzw. Parameter-Informationen entsprechende Datenstrukturen mit einheitlicher Repräsentationsform erstellt werden. Diese können dann beispielsweise manuell ein entsprechendes Auswerte-Ergebnis zugeordnet werden. Ein solches Auswerte-Ergebnis kann beispielsweise einem Vergleichswert eines Vergleichs der entsprechenden Datenstrukturen mit einer entsprechenden weiteren Datenstruktur gemäß der vorliegenden Beschreibung entsprechen. Weiterhin kann ein solches Auswerteergebnis einer gut-schlecht- bzw. Verbesserungs-Verschlechterungs-Analyse entsprechen, beispielsweise im Rahmen der Verwendung eines Verfahrens gemäß der vorliegenden Beschreibung zur Überwachung einer Produktion oder eines Verfahrensablaufs.

Ein solches neuronales Netz kann zum Vergleichen der ersten und zweiten Datenstruktur dann beispielsweise so eingesetzt werden, dass die erste und zweite Datenstruktur auf entsprechende geeignete Weise gemäß nach dem Stand der Technik bekannten Verfahren dem neuronalen Netz zugeleitet werden und dieses einen entsprechenden Vergleichswert oder auch gut/schlecht-Wert oder auch verbessert/verschlechtert-Wert ausgibt.

Unter einem neuronalen Netz wird, zumindest im Zusammenhang mit der vorliegenden Beschreibung, eine elektronische Einrichtung verstanden, welche ein Netzwerk sogenannter Knoten umfasst, wobei in der Regel jeder Knoten mit mehreren anderen Knoten verbunden ist. Die Knoten werden beispielsweise auch als Neuronen, Units oder Einheiten bezeichnet. Dabei hat jeder Knoten mindestens eine Eingangs- und eine Ausgangsverbindung. Als Eingangs-Knoten für ein neuronales Netz, werden solche Knoten verstanden, welche von der Außenwelt Signale (Daten, Reize, Muster oder ähnliches) empfangen können. Unter Ausgabe-Knoten eines neuronalen Netzes werden solche Knoten verstanden, welche Signale, Daten oder ähnliches an die Außenwelt weitergeben können. Unter sogenannten "versteckten Knoten" ("hidden nodes") werden solche Knoten eines neuronalen Netzes verstanden, welche weder als Eingangs- noch als Ausgangs-Knoten ausgebildet sind.

Ein neuronales Netz kann in der Regel trainiert werden, indem über verschiedenste bekannte Lernmethoden durch Eingabe von Eingangsdaten in das neuronale Netz und Analyse der dann entsprechenden Ausgangsdaten aus dem neuronalen Netz Parameterwerte für die einzelnen Knoten oder für deren Verbindungen ermittelt werden. Auf diese Weise kann ein neuronales Netz mit bekannten Daten, Mustern, Reizen oder Signalen auf an sich heute bekannte Weise trainiert werden, um das so trainierte Netz dann nachfolgend beispielsweise zur Analyse weiterer Daten verwenden zu können.

Dabei kann das neuronale Netz beispielsweise als ein sogenanntes tiefes neuronales Netz ("deep neural network" (DNN)) ausgebildet sein. Ein solches "deep neural network" ist ein neuronales Netz, in welchem die Netzknoten in Schichten angeordnet sind (wobei die Schichten selbst ein-, zwei- oder auch höher-dimensional sein können). Ein tiefes neuronales Netz umfasst dabei mindestens eine oder zwei sogenannte verdeckte Schichten, welche nur Knoten umfassen, die nicht Eingangsknoten oder Ausgangsknoten sind. Das heißt, die verdeckten Schichten haben keine Verbindungen zu Eingangssignalen oder Ausgangssignalen.

Unter dem sogenannten "Deep Learning" wird dabei beispielsweise eine Klasse von maschinellen Lerntechniken verstanden, welche viele Schichten der nichtlinearen Informationsverarbeitung für die überwachte oder nicht-überwachte Merkmalsextraktion und -transformation sowie zur Musteranalyse und - klassifizierung ausnutzt.

Das Deep-Neural-Network kann beispielsweise auch eine so genannte Auto-Encoder-Struktur aufweisen, welche im Verlauf der vorliegenden Beschreibung noch näher erläutert wird. Eine derartige Auto-Encoder-Struktur kann beispielsweise geeignet sein, um eine Dimensionalität der Daten zu reduzieren und beispielsweise so Ähnlichkeiten und Gemeinsamkeiten zu erkennen.

Ein Deep-Neural-Network kann beispielsweise auch als ein so genanntes Klassifizierungs-Netz ausgebildet sein, welches besonders dazu geeignet ist, Daten in Kategorien einzuteilen. Derartige Klassifizierungs-Netze werden beispielsweise in Zusammenhang mit Handschrift-Erkennung eingesetzt.

Eine weitere mögliche Struktur eines neuronalen Netzes mit Deep-Learning-Architektur kann beispielsweise die Ausgestaltung als so genanntes "Deep-Believe-Network" sein.

Ein neuronales Netz mit einer Deep-Learning-Architektur kann beispielsweise auch eine Kombination von mehreren der vorstehend genannten Strukturen aufweisen. So kann beispielsweise die Deep-Learning-Architektur eine Auto-Encoder-Struktur umfassen, um die Dimensionalität der Eingangsdaten zu reduzieren, welche dann weiterhin mit einer anderen Netzstruktur kombiniert werden kann, um beispielsweise Besonderheiten und/oder Anomalien innerhalb der datenreduzierten Dimensionalität zu erkennen bzw. die datenreduzierte Dimensionalität zu klassifizieren.

Zum Training des neuronalen Netzes mit der Deep-Learning-Architektur kann beispielsweise eine der Methoden des so genannten "überwachten Lernens" ("supervised learning") verwendet werden. Hierbei werden einem Netz durch Training mit entsprechenden Trainingsdaten diesen Daten jeweils zugeordnete Ergebnisse oder Fähigkeiten antrainiert. Weiterhin kann zum Training des neuronalen Netzes auch eine Methode des so genannten unüberwachten Trainings ("unsupervised learning") verwendet werden. Ein solcher Algorithmus erzeugt für eine gegebene Menge von Eingaben beispielsweise ein Modell, welches die Eingaben beschreibt und daraus Vorhersagen ermöglicht. Dabei gibt es beispielsweise Clustering-Verfahren, mit welchen sich die Daten in verschiedene Kategorien einteilen lassen, wenn sie sich beispielsweise durch charakteristische Muster voneinander unterscheiden.

Beim Trainieren eines neuronalen Netzes können auch überwachte und unüberwachte Lernmethoden kombiniert werden, beispielsweise wenn Teilen der Daten antrainierbare Eigenschaften oder Fähigkeiten zugeordnet sind, während dies bei einem anderen Teil der Daten nicht der Fall ist.

Weiterhin können auch noch Methoden des so genannten bestärkenden Lernens ("reinforcement learning") für das Training des neuronalen Netzes, zumindest unter anderem, verwendet werden.

Allgemein wird unter dem Training des neuronalen Netzes verstanden, dass die Daten, mit welchen das neuronale Netz trainiert wird, im neuronalen Netz mithilfe eines oder mehrerer Trainings-Algorithmen verarbeitet werden, um so genannte Vorspannungswerte ("Bias"), Gewichtungswerte ("weights") und/oder Transferfunktionen ("Transfer Functions") der einzelnen Knoten des neuronalen Netzes bzw. der Verbindungen zwischen jeweils zwei Knoten innerhalb des neuronalen Netzes zu berechnen bzw. zu verändern.

Die die einzelnen Knoten und deren Verbindungen beschreibenden Werte inklusive weiterer das neuronale Netz beschreibende Werte können beispielsweise in einem das neuronale Netz beschreibenden Wertesatz gespeichert werden. Ein solcher Wertesatz stellt dann beispielsweise eine Ausgestaltung des neuronalen Netzes dar. Wird ein solcher Wertesatz nach einem Training des neuronalen Netzes gespeichert, so wird damit beispielsweise eine Ausgestaltung eines trainierten neuronalen Netzes gespeichert. So ist es beispielsweise möglich, in einem ersten Computersystem das neuronale Netz mit entsprechenden Trainingsdaten zu trainieren, den entsprechenden Wertesatz, welcher diesem neuronalen Netz zugeordnet ist, dann zu speichern und als Ausgestaltung des trainierten neuronalen Netzes in ein zweites System zu transferieren.

Beispielsweise kann ein Training, welches eine relativ hohe Rechenleistung eines entsprechenden Computers erfordert, auf einem hochperformanten System geschehen, während weitere Arbeiten oder Datenanalysen mit dem trainierten neuronalen Netzes dann durchaus auf einem niedriger-performanten System durchgeführt werden kann. Solche weitere Arbeiten und/oder Datenanalysen mit dem trainieren neuronalen Netz können zum Beispiel auf einem Assistenzsystem und/oder auf einer Steuereinrichtung, einer Speicherprogrammierbaren Steuerung oder einer modularen Speicherprogrammierbaren Steuerung gemäß der vorliegenden Beschreibung erfolgen.

Ein Verfahren gemäß der vorliegenden Beschreibung kann weiterhin auch derart ausgebildet und eingerichtet sein, dass die erste und zweite Datenstruktur jeweils eine zwei- oder höherdimensionale Diagramm-Struktur oder eine zwei- oder höherdimensionale Graphen-Struktur aufweist oder jeweils als ein zwei- oder höherdimensionales Diagramm oder einen zwei- oder höherdimensionalen Graph dargestellt oder darstellbar ist.

Dabei kann beispielsweise im Rahmen des Erstellens der 1. und 2. Datenstruktur zuerst ein jeweiliges Diagramm, ein jeweiliger Graph bzw. eine jeweilige Diagramm- oder Graphen-Struktur erstellt werden und auf diese dann ein Clustering Verfahren angewendet werden. Weiterhin kann das Clustering auch bereits parallel zur Erstellung des Diagramms, des Graphen bzw. der Diagramm-Struktur oder Graphen-Struktur erfolgen. Im Ergebnis umfasst die 1. und 2. Datenstruktur dann bereits sowohl die jeweiligen Diagramme, Graphen, Diagramm-Strukturen oder Graphen-Strukturen als auch die jeweiligen Cluster-Strukturen dazu.

Alternativ, oder auch zusätzlich kann im Rahmen des Vergleichens der 1. und 2. Struktur ein Clustering-Verfahren auf die jeweiligen Diagramme, Graphen, Diagramm-Strukturen oder Graphen-Strukturen angewendet werden. Dies kann sowohl dann erfolgen, wenn auf die jeweiligen Diagramme, Graphen, Diagramm-Strukturen oder Graphen-Strukturen noch kein Clustering angewendet wurde, als auch, wenn auf diese bereits ein Clustering-Verfahren, wie beispielsweise vorstehend beschrieben, im Rahmen des Herstellens der Datenstruktur angewendet wurde (sogenanntes "hierarchisches Clustering").

Unter einer Diagrammstruktur oder einem Diagramm wird jede Struktur verstanden, welche sich innerhalb eines entsprechenden Koordinatensystems darstellen lässt, insbesondere welche sich als einzelne Datenpunkte innerhalb eines entsprechenden Koordinatensystems darstellen lässt. Dabei entspricht einer N-dimensionalen Diagramm-Struktur, bzw. einem N-dimensionalen Diagramm, eine Struktur, welche sich beispielsweise als einzelne Datenpunkte innerhalb eines N-dimensionalen Diagramms darstellen lässt.

Unter einer Graphen-Struktur bzw. einem Graphen wird dabei jede Struktur verstanden, welche sich als entsprechender Graph darstellen lässt. Dabei kann ein solcher Graph bzw. eine solche Graphen-Struktur derart ausgebildet und eingerichtet sein, dass beispielsweise die Knoten des Graphen einzelnen Werten der Datenstruktur entsprechen und mit entsprechenden Verbindungen verknüpft sind, den sogenannten "Kanten" des Graphen. Dabei können solche Verbindungen bzw. Kanten derart ausgebildet und eingerichtet sein, dass z.B. alle Punkte mit allen anderen Punkten verknüpft sind, ein Punkt nur mit einer Maximalzahl beliebiger Punkte verknüpft ist und/oder ein (Sampling-)Punkt aus der Frequenzdomäne zwingend mit allen Samples der weiteren Sensorwerte verbunden ist, insbesondere mit maximal einer vorgegebenen oder vorgebbaren Zahl von weiteren Samples des Frequenzraums verbunden ist.

Weiterhin können bei einem entsprechenden Graphen bzw. einer entsprechenden Graphen-Struktur auch Teile der die Knoten bestimmenden Werten einem Teil der Datenstruktur entsprechen und ein weiterer Teile der Datenstruktur den zugehörigen Kanten.

Diese Ausgestaltung des vorliegenden Verfahrens hat den Vorteil, dass es sehr effiziente und etablierte Methoden gibt, derartige Diagramme und/oder Graphen auszuwerten und miteinander zu vergleichen. Auf diese Weise lässt sich ein Vergleich der Datenstrukturen und ein entsprechendes Abgleichen eines Vergleichsergebnisses mit vorgebbaren oder vorgegebenen Kriterien weiter vereinfachen.

Die Ursachenanalyse (englisch: "Root cause analysis") ist beispielsweise für industrielle Produktionsprozesse von großer Bedeutung und gerade bei Verwendung eines Verfahrens gemäß der vorliegenden Beschreibung, insbesondere bei Verwendung eines Clustering-Verfahrens gemäß der vorliegenden Beschreibung im Rahmen eines solchen Verfahrens, einfacher möglich. Im Rahmen einer solchen Anwendung kann beispielsweise die Veränderung von Clustern im Nachgang z.B. durch das Verfolgen von Knotenbewegungen innerhalb entsprechender Graphen nachvollzogen werden. Knoten können ja im Rahmen eines Verfahrens gemäß der vorliegenden Beschreibung direkt aus entweder Sensorwerten bzw. harmonischen Wellen des Frequenzraums hervorgehen. Und solche Knoten lassen sich dann z.B. entweder die jeweiligen Sensorwerten bzw. die harmonischen Wellen des Frequenzraums zuordnen, aus denen sie hervorgegangen sind. Führen beispielsweise bestimmte Knoten zur Veränderung in der Clusterstruktur, können hiermit beispielsweise unmittelbar die dahinterliegenden Zeitreihen/ Bildanteile als Ursachen identifiziert werden.

Ganz allgemein ist ein Graph ein mathematisches Konstrukt, welches aus sogenannten "Knoten" und jeweils zwei Knoten verbindenden sogenannten "Kanten" aufgebaut ist. Eine graphische Darstellung solcher Graphen kann beispielsweise eine Darstellung sein, bei welcher die Knoten als Punkte oder Kreise und die Kanten als jeweils Kreise verbindende Linien dargestellt sind.

Kanten können dabei beispielsweise sogenannte "ungerichtete Kanten" sein, bei welchen der Verbindung der jeweiligen Knoten keine logische Richtung zugeordnet ist. Weiterhin können Kanten auch als sogenannte "gerichtete Kanten" ausgebildet sein, bei welchen der Verbindung der jeweiligen Knoten eine logische Richtung bzw. Bedeutung zugeordnet ist.

Ein Verfahren gemäß der vorliegenden Beschreibung kann weiterhin derart ausgebildet und eingerichtet sein,
dass im Rahmen eines Erstellens der ersten und zweiten Datenstruktur gemäß Verfahrensschritt c.) jeweils ein Clustering-Verfahren auf die jeweiligen Diagramme, Graphen, Diagramm-Strukturen oder Graphen-Strukturen der ersten und zweiten Datenstruktur angewendet wurde oder wird,
oder, dass im Rahmen eines Vergleichens der ersten und zweiten Datenstruktur gemäß Verfahrensschritt d.) jeweils ein Clustering-Verfahren auf die jeweiligen Diagramme, Graphen, Diagramm-Strukturen oder Graphen-Strukturen der ersten und zweiten Datenstruktur angewendet wird.

Das Vergleichen der ersten und zweiten Datenstruktur gemäß Verfahrensschritt d.) bzw. Erstellen der ersten und zweiten Datenstruktur gemäß Verfahrensschritt c.) kann z.B. durch Anwendung eines oder mehrerer Clustering-Verfahrens auf die jeweiligen Diagramme, Graphen, Diagramm-Strukturen oder Graphen-Strukturen der ersten und zweiten Datenstruktur erfolgen.

Nachfolgend einem solchen Clustering können dann beispielsweise im Rahmen des Verfahrensschritt d.) weiterhin die gemäß des vorstehenden Clustering identifizierten Cluster, Clusterstrukturen, Cluster-Eigenschaften oder ähnliches verglichen werden.

Weiterhin kann in diesem Zusammenhang ein vorgegebenes oder vorgebbares Kriterium, welches gemäß Verfahrensschritt e.) die Ausgabe einer Information auslöst, ein Kriterium bezüglich des Unterschieds einer Anzahl von identifizierten Clustern, ein Kriterium bezüglich eines oder mehrerer Positions-Unterschiede zwischen identifizierten Clustern, oder auch ein Kriterium bezüglich sonstiger Unterschiede bezüglich Eigenschaften, Anzahl und Lage von jeweils identifizierten Clustern umfassen oder sein.

Dabei kann es sich bei der Anwendung des Clustering-Verfahrens beispielsweise um ein automatisiertes Clustering-Verfahren handeln. Dabei kann beispielsweise mithilfe einer entsprechenden Software, bei deren Ablauf das Clustering-Verfahren automatisch ausgeführt wird, ein Clustering der Datenstrukturen erfolgen. Dabei kann im Rahmen der Software beispielsweise einer oder auch mehrere Clustering-Algorithmen realisiert sein.

Weiterhin kann es sich beispielsweise bei der Anwendung des Clustering-Verfahrens auch um ein halb-automatisiertes Clustering-Verfahren handeln. Dies kann beispielsweise vermittels einer entsprechenden Software realisiert werden, bei deren Ablauf das Clustering-Verfahren halb-automatisch ausgeführt wird. Dies kann beispielsweise derart realisiert sein, dass beim Ablauf des Clustering Verfahrens die Software zu gewissen Zeitpunkten entsprechende Nutzereingaben erwartet.

Die Anwendung des Clustering-Verfahrens kann zum Beispiel die Anwendung eines Clustering-Algorithmus oder auch die Anwendung mehrerer Clustering-Algorithmen, beispielsweise nacheinander, umfassen. Solche Clustering-Algorithmen können beispielsweise ein sogenanntes "K-Means Clustering", ein sogenanntes "Mean-Shift Clustering", ein sogenanntes "Expectation-Maximization (EM) Clustering using Gaussian Mixture Models(GMM)", ein sogenanntes "Agglomerative Hierarchical Clustering" und/oder ein sogenanntes "Density-Based Spatial Clustering", z.B. ein Density-Based Spatial Clustering of Applications with Noise(DBSCAN)" sein. Weitere Beispiele für Clustering-Algorithmen können z.B. nachfolgende Algorithmen sein: "Mini Batch K-Means", "Affinity Propagation", "Mean Shift", "Spectral Clustering", "Ward", "Agglomeration Clustering", "Birch", "Gaussian Mixture".

Cluster sind damit Gruppen von ähnlichen Datenpunkten oder Datengruppen betrachtet werden, die durch eine entsprechende Clusteranalyse bzw. ein entsprechendes Clustering gebildet werden.

Unter einem Clustering wird ganz allgemein eine Technik des sogenannten "machine learning" verstanden, bei der Daten oder Datenpunkte in sogenannte "Cluster" gruppiert werden. Bei einem Satz von Daten bzw. Datenpunkten kann man z.B. ein Clusteranalyse-Verfahren, ein Clustering-Verfahren oder einen Clustering-Algorithmus verwenden, um jedes Datum bzw. jeden Datenpunkt oder auch einzelne Daten oder Datenpunkte in eine bestimmte Gruppe zu klassifizieren. Eine solche Gruppe wird dann als "Cluster" bezeichnet. Dabei weisen Daten bzw. Datenpunkte, die sich in derselben Gruppe (also demselben Cluster) befinden, ähnliche Eigenschaften und/oder Merkmale auf, während Datenpunkte in verschiedenen Gruppen sehr unterschiedliche Eigenschaften und/oder Merkmale aufweisen.

Mathematisch bestehen Cluster aus Objekten, die zueinander eine geringere Distanz (oder umgekehrt: höhere Ähnlichkeit) aufweisen als zu den Objekten anderer Cluster. Man kann entsprechende Clustering-Verfahren beispielsweise nach den verwendeten Distanz- bzw. Proximitätsmaßen zwischen Objekten der Cluster, aber auch zwischen ganzen Clustern, unterscheiden. Weiterhin bzw. alternativ kann man entsprechende Clustering-Verfahren auch nach jeweiligen Berechnungsvorschriften für solche Distanzmaße unterscheiden.

Unter Clusteranalysen bzw. Clustering-Verfahren sind Verfahren zur Entdeckung von Ähnlichkeitsstrukturen in großen Datenbeständen zu verstehen. Dazu zählen beispielsweise Methoden des überwachten beziehungsweise unüberwachten maschinellen Lernens, wie k-means oder DBSCAN. Das Ergebnis der Clusteranalyse sind Cluster. Der Vorteil ist hier, dass die Analyse der Daten vollautomatisiert durchgeführt werden kann. Überwachtes Lernen würde sich anbieten, wenn bereits Daten in kontextualisierter Form vorliegen. Algorithmen des unüberwachten Lernens ermöglichen es, auch Ähnlichkeitsstrukturen in Daten zu finden, die noch nicht kontextualisiert sind. Die gefundenen Cluster können dann von einem Domänen-Experten analysiert werden.

Bei der Durchführung des Clustering-Verfahrens bzw. eines Clustering-Algorithmus gemäß der vorliegenden Beschreibung können dabei je nach Art der verwendeten Datenkategorien die verschiedensten üblichen Distanzmaße oder Ähnlichkeitsmaße für numerische Daten, binäre Daten, String-Daten, kategorische Daten, Text-Daten, und/oder Zeit-Serien-Daten verwendet werden.

Beispiele für solche Clustering-Verfahren oder -Algorithmen sind:
- sogenanntes "unsupervised clustering",
- das sogenannte K-means Clustering-Verfahren,
- Verfahren aus der Bildbearbeitung zur Erkennung von zusammengehörenden Strukturen innerhalb vorliegender Bilder oder Bildinformationen
- eine Kombination der oben vorstehend genannten Verfahren.

Dabei kann das verwendete Clustering-Verfahren den Daten-Typen innerhalb der vorliegenden Daten angepasst ausgewählt werden.

Ein Verfahren gemäß der vorliegenden Beschreibung kann weiterhin derart ausgebildet und eingerichtet sein, dass das Verfahren zur Überwachung eines Verfahrensablaufs oder Produktionsablaufs derart ausgebildet und eingerichtet ist,
- dass das Erfassen des ersten beziehungsweise zweiten Bildes als Erfassen eines ersten beziehungsweise zweiten Bildes eines Gegenstandes bezüglich des Produktionsablaufs oder einer Situation bezüglich des Produktionsablaufs ausgebildet und eingerichtet ist, und
- dass das Erfassen des mindestens einen ersten beziehungsweise zweiten skalaren Sensorwerts als Erfassen mindestens eines ersten beziehungsweise mindestens eines zweiten skalaren Sensorwerts betreffend den Gegenstand bezüglich des Produktionsablaufs oder die Situation bezüglich des Produktionsablaufs ausgebildet und eingerichtet ist.

Mittels eines derart ausgestalteten Verfahrens lässt sich beispielsweise der Ablauf eines Verfahrens oder einer Produktion bzw. bestimmter Produktionsschritte effizient analysieren und/oder überwachen. Durch ein derart ausgestaltetes Verfahren wird es ermöglicht sowohl Bildinformationen als auch Sensor-Informationen bezüglich des Verfahrens bzw. der Produktion in die Analyse einzubeziehen, wodurch das Verfahren bzw. ausgewählte Verfahrensschritte bzw. Produktionsschritte sehr gut und/oder umfassend erfasst und charakterisiert werden können.

Weiterhin kann die Analyse dieser Daten beispielsweise im Rahmen des Vergleichs der dabei ermittelten Datenstrukturen, durchaus unter Verwendung eines neuronalen Netzes durchgeführt werden, ein solches ist aber nicht unbedingt notwendig. Daher vereinfacht ein solches Verfahren die Analyse von Produktionsverfahren im Vergleich mit aus dem Stand der Technik bekannten Verfahren weiter.

In diesem Fall kann das vorgegebene oder vorgebbare Kriterium zur Ausgabe einer entsprechenden Information beispielsweise derart gewählt sein, dass eine Information dann ausgegeben wird, wenn im Rahmen des Verfahrensablaufs oder Produktionsablaufs fehlerhafte Zustände oder fehlerhafte Produkte oder auch gefährliche Zustände vorliegen könnten. Die Information kann dann beispielsweise eine entsprechende Warninformation sein oder auch ein entsprechender Steuerbefehl, der beispielsweise bestimmte Verfahrensteile oder -bereiche bzw. Produktionssegmente abschaltet oder in einen sicheren Zustand überführt. Weiterhin können entsprechende Informationen auch Alarmmeldungen sein, welche dann beispielsweise über ein entsprechendes Alarmsystem ausgegeben, verarbeitet und/oder verbreitet werden können.

Ein erfasstes Bild kann in diesem Fall beispielsweise als Bild eines End- oder Zwischenprodukts eines Produktionsverfahrens ausgestaltet sein. Weiterhin kann ein Bild beispielsweise als Bild einer Anlagen- oder Gerätekomponente beziehungsweise eines Anlagen- oder Geräteteils einer im Rahmen eines Produktionsverfahrens verwendeten Anlage beziehungsweise eines verwendeten Geräts ausgestaltet sein.

Entsprechende Sensorwerte können beispielsweise das Produktionsverfahren charakterisierende Sensorwerte sein, wie beispielsweise eine Temperatur oder ein Temperaturverlauf eines Ofens, eine Transportgeschwindigkeit einer im Rahmen des Produktionsverfahrens verarbeiteten Bahn, Leistungs- oder Verbrauchswerte eines im Rahmen des Produktionsverfahrens ablaufenden Verfahrensschritts oder vergleichbare Sensorwerte bezüglich eines beispielsweise zu einem Zwischen- oder Endprodukt führenden Produktionsverfahrens oder Produktionsschritts.

Weiterhin kann das Bild einem Verfahrensablauf zugeordnet sein, z.B. ein Bild, das innerhalb einer Brennkammer einer Gasturbine aufgenommen wurde oder wird. Vermittels derartiger Bilder können unter Verwendung eines Verfahrens gemäß der vorliegenden Beschreibung beispielsweise Anomalien innerhalb eines solchen Verbrennungsverfahrens detektiert werden.

Als mindestens ein zugeordneter Sensorwert kann dann in diesem Fall z.B. eine Zeitreihe der Leistung der Gasturbine herangezogen werden. Allgemein kann auch hier jeder den Verfahrensablauf charakterisierende oder dem Verfahrensablauf entstammende Sensorwert als der mindestens eine zugeordnete Sensorwert verwendet werden. Dies kann beispielsweise die schon erwähnte Zeitreihe oder auch Einzelwerte bezüglich einer Leistung, einer Geschwindigkeit, einer Temperatur oder auch weiterer den Verfahrensschritt charakterisierenden Messgrößen sein.

Ein Verfahren gemäß der vorliegenden Beschreibung kann weiterhin derart ausgebildet und eingerichtet sein, dass der Produktionsablauf zur Herstellung eines Produkts ausgebildet und eingerichtet ist und eine Abfolge von Produktionsschritten umfasst, wobei nach dem Ablauf eines ausgewählten Produktionsschritts aus der Abfolge von Produktionsschritten ein Zwischenprodukt vorliegt,
- und dass weiterhin das erste Bild als ein erstes Zwischenprodukt-Bild ausgebildet und eingerichtet ist,
- der mindestens eine erste skalare Sensorwert sich auf den ausgewählten Produktionsschritt bezieht,
- das zweite Bild als ein zweites Zwischenprodukt-Bild ausgebildet und eingerichtet ist, und
- der mindestens eine zweite skalare Sensorwert sich auf den ausgewählten Produktionsschritt bezieht.

Die vorstehend genannte Aufgabe wird weiterhin gelöst durch ein Verfahren zum Überwachen eines Produktionsablaufs zur Herstellung eines Produktes,
wobei der Produktionsablauf eine Abfolge von Produktionsschritten umfasst, wobei nach dem Ablauf eines ausgewählten Produktionsschritts aus der Abfolge von Produktionsschritten ein Zwischenprodukt vorliegt,
das Verfahren umfassend die nachfolgenden Schritte:
   a.) Erfassen eines ersten Zwischenprodukt-Bildes, und Erfassen mindestens eines ersten skalaren Sensorwerts bezüglich des ausgewählten Produktionsschritts;
   b.) Erfassen eines zweiten Zwischenprodukt-Bildes und Erfassen mindestens eines zweiten skalaren Sensorwerts bezüglich des ausgewählten Produktionsschritts;
   c.) Einbringen des ersten Bilds und des mindestens einen ersten skalaren Sensorwerts als konsistente Repräsentationsform in eine erste Datenstruktur, und
      Einbringen des zweiten Bilds und des mindestens einen zweiten skalaren Sensorwerts als konsistente Repräsentationsform in eine zweite Datenstruktur;
   d.) Vergleichen der ersten und zweiten Datenstruktur, und
   e.) Ausgabe einer Information, wenn der Vergleich einen Unterschied ergibt, der einem vorgegebenen oder vorgebbaren Kriterium entspricht.

Dabei kann Verfahrensschritt e.) beispielsweise derart ausgebildet und eingerichtet sein, dass die ausgegebene Information als eine Warn-Information ausgebildet und eingerichtet ist und/oder das vorgegebene oder vorgebbare Kriterium einem Fehler-Kriterium entspricht.

Weiterhin kann beispielsweise das erste Bild als ein erstes Zwischenprodukt-Bild eines zu einem ersten Zeitpunkt vorliegenden ersten Zwischenprodukts und das zweite Bild als ein zweites Zwischenprodukt-Bild eines zu einem zweiten Zeitpunkt vorliegenden zweiten Zwischenprodukts ausgebildet und eingerichtet sein.

Im Rahmen einer diskreten Fertigung von aufeinanderfolgenden Einzelprodukten können beispielsweise der erste und der zweite Zeitpunkt derart gewählt werden, dass zum ersten Zeitpunkt ein erstes Zwischenprodukt vorliegt und zum zweiten Zeitpunkt ein dem ersten Zwischenprodukt unmittelbar nachfolgendes Zwischenprodukt vorliegt, sodass jedes Zwischenprodukt im Rahmen der Produktionsfolge mit dem vorhergehenden verglichen wird. Der erste und zweite Zeitpunkt kann weiterhin derart gewählt werden, dass nicht jedes Zwischenprodukt mit dem vorhergehenden Zwischenprodukt verglichen wird, sondern nur jedes zweite, fünfte, zehnte oder sonstige Zwischenprodukt jeweils betrachtet wird.

Im Rahmen einer kontinuierlichen Produktion können der erste und zweite Zeitpunkt beispielsweise derart beabstandet sein, dass sie einer typischen Zeit entsprechen, in welchen sich der entsprechende Verfahrensablauf verändert. Dies kann beispielsweise eine Regelungs-Zeitkonstante für einen am Verfahren mitwirkenden Vorgang oder auch für ein am Verfahren beteiligtes Gerät sein, beispielsweise einen Ofen, eine Heizung, eine Kühlung, eine Verbrennung, ein Transportband, eine Werkzeugmaschine, eine Bearbeitungsmaschine oder Vergleichbares.

Entsprechend der vorstehend genannten Bilderfassung des ersten und zweiten Bildes zum ersten und zweiten Zeitpunkt kann der mindestens eine erste skalare Sensorwert sich auf den ausgewählten Produktionsschritt beziehen und an mindestens einem auf den ersten Zeitpunkt bezogenen weiteren ersten Zeitpunkt erfasst werden. Weiterhin kann der mindestens eine zweite skalare Sensorwert sich auf den ausgewählten Produktionsschritt beziehen und an mindestens einem auf den zweiten Zeitpunkt bezogenen weiteren zweiten Zeitpunkt erfasst werden.

Beispielsweise kann der mindestens eine auf den ersten Zeitpunkt bezogene weitere erste Zeitpunkt derart gewählt sein, dass die entsprechend aufgenommenen Sensorwerte beispielsweise im Rahmen der Herstellung des durch das Bild jeweils erfassten Zwischenprodukte erfasst werden. Weiterhin kann der mindestens eine weitere erste Zeitpunkt so gewählt sein, dass beispielsweise bei der Analyse eines Verfahrensablaufs die Sensorwerte zu Zeitpunkten aufgenommen werden, die kausal mit dem auf dem Bild erfassten Zustand zusammenhängen. Entsprechendes gilt auch für die Beziehung des mindestens einen auf den zweiten Zeitpunkt bezogenen weiteren zweiten Zeitpunkts in Bezug auf die Erfassung der zweiten Sensorwerte und des zweiten Bildes.

Ganz allgemein können der mindestens eine auf den ersten bzw. zweiten Zeitpunkt bezogene weitere erste bzw. zweite Zeitpunkt derart gewählt werden, dass der jeweils erfasste mindestens eine Sensorwert in kausalem Zusammenhang mit der mit dem ersten bzw. zweiten Bild erfassten Situation bzw. dem erfassten Gegenstand stehen.

Die Abfolge von Produktionsschritten kann beispielsweise aus einem oder mehreren Produktionsschritten bestehen.

Dabei können die Produktionsschritte eines Produktionsablaufs beispielsweise derart ausgebildet und eingerichtet sein, dass jeweils ein Produktionsschritt von jeweils einer Produktionsmaschine und/oder einem Produktionsgerät durchgeführt wird. Weiterhin oder auch zusätzlich kann ein Produktionsschritt beispielsweise durch eine bestimmte Einstellung von Parameterwerten oder eine bestimmte Abfolge von Parameterwerten (z. B. einem Aufheizvorgang oder Abkühlvorgang) charakterisiert sein.

Durch die Abfolge von Produktionsschritten kann beispielsweise ein sogenanntes diskretes Verfahren erreicht werden, bei welchem aufeinanderfolgende Einzelprodukte (Z. B. Autos, Handys, ...) hergestellt werden. In diesem Fall kann ein Zwischenprodukt beispielsweise ein nach einem bestimmten Produktionsschritt vorliegendes Zwischenprodukt sein, welches zu einem angegebenen Zeitpunkt den entsprechenden Produktionsschritt beendet hatte.

Durch die Abfolge von Produktionsschritten kann beispielsweise weiterhin ein sogenanntes kontinuierliches Verfahren erreicht werden, bei welchem kontinuierlich beispielsweise bestimmte Materialien oder Stoffe produziert werden. Bei derartig ausgestalteten Verfahren kann ein Zwischenprodukt dann ein zu einem angegebenen Zeitpunkt nach oder während eines Verfahrensschritts vorliegendes Zwischenprodukt sein.

Weiterhin kann durch die Abfolge von Produktionsschritten auch ein sogenanntes Batch-Verfahren erreicht werden, welches quasi einen Hybrid aus einem diskreten und einem kontinuierlichen Verfahren darstellt. Hierbei können Zwischenprodukte sowohl entsprechend der vorstehend genannten Erläuterung bezüglich diskreter Verfahren als auch bezüglich kontinuierlicher Verfahren Anwendung finden.

Ein Verfahren gemäß der vorliegenden Beschreibung kann weiterhin derart ausgebildet und eingerichtet sein, dass innerhalb Verfahrensschritt c.) der erste Datensatz unter Verwendung mindestens eines weiteren ersten Produktionsparameter-Wertes,
und der zweite Datensatz unter Verwendung mindestens eines weiteren zweiten Produktionsparameter-Wertes erstellt wird.

Dabei wird im Rahmen des Verfahrensschritt c.) auch der mindestens eine erste Produktionsparameter in die konsistente Repräsentationsform der ersten Datenstruktur eingebracht und dafür ggf. auch in die entsprechende Repräsentation transformiert bzw. an diese angepasst. Auf vergleichbare Weise wird auch der mindestens eine zweite Produktionsparameter in die konsistente Repräsentationsform der zweiten Datenstruktur eingebracht und dafür ggf. auch in die entsprechende Repräsentation transformiert bzw. an diese angepasst.

Auf diese Weise können verschiedenste weitere Sensor- oder sonstige Werte bezüglich des Produktionsablaufs, des Verfahrensablaufs, entsprechender Produktionsschritte oder -geräte, Ausgangsmaterialien oder -bedingungen oder weitere eine Produktion bzw. ein Verfahren charakterisierende Parameter in die entsprechende Analyse eingebracht werden.

So kann eine Analyse gemäß der vorliegenden Beschreibung beispielsweise weiter verbessert und/oder robuster bzw. auch empfindlicher gemacht werden - beispielsweise je nach Wahl der entsprechenden Parameter bzw. des Vergleichs- oder Auswerteverfahrens.

Ein Produktionsparameter kann jede beispielsweise zum ersten bzw. zweiten Zeitpunkt vorliegende Eigenschaft des während des ausgewählten Produktionsschritts vorliegenden be- oder verarbeiteten Produkts oder auch der Produktionsanlage sein.

Beispielsweise kann weiterhin der mindestens eine weitere erste bzw. zweite Produktionsparameter sich auf den ausgewählten Produktionsschritt beziehen und/oder zu mindestens einem weiteren ersten bzw. zweiten Zeitpunkt erfasst werden bzw. vorliegen.

Dabei kann der Produktionsparameter z.B. als Zeitreihe oder Messwert während des Ablaufs des ausgewählten Produktionsschritts erfasst werden. Weiterhin kann der Produktionsparameter auch ein sonstiger Wert sein, der für den ausgewählten Produktionsschritt, das während des ausgewählten Produktionsschritts be- oder verarbeitete Produkt oder die Produktionsanlage jeweils während des Ablaufs des ausgewählten Produktionsschritts innerhalb der Zeitspanne relevant ist.

Weiterhin kann das Verfahren gemäß der vorliegenden Beschreibung derart ausgebildet und eingerichtet sein,
dass das Verfahren zur Überwachung der Bewegung eines Fahrzeugs derart ausgebildet und eingerichtet ist,
- dass das Erfassen des ersten beziehungsweise zweiten Bildes als Erfassen eines ersten beziehungsweise zweiten Bildes eines Umgebungsausschnitts des Fahrzeugs ausgebildet und eingerichtet ist, und
- dass das Erfassen des mindestens einen ersten beziehungsweise zweiten Sensorwerts als Erfassen mindestens eines ersten beziehungsweise mindestens eines zweiten Sensorwerts bezüglich des Fahrzeugs oder einer Umgebung des Fahrzeugs ausgebildet und eingerichtet ist.

Dabei kann das Fahrzeug beispielsweise als ein sogenanntes autonomes Fahrzeug ausgebildet und eingerichtet sein. Solch ein autonomes Fahrzeug kann beispielsweise als ein sogenanntes "AGV" ("autonomous guided vehicle") ausgestaltet und eingerichtet sein. Allgemein wird ein autonomes Fahrzeug als ein Fahrzeug betrachtet, welches sich ohne bzw. im Wesentlichen ohne die ständige Einwirkung eines menschlichen Fahrers oder auch gänzlich ohne einen menschlichen Fahrer bewegt.

Im Rahmen der Überwachung der Bewegung eines Fahrzeugs kann ein Verfahren gemäß der vorliegenden Beschreibung beispielsweise derart ausgebildet und eingerichtet sein, dass in regelmäßigen Zeitabständen beispielsweise ein autonomes Fahrzeug ein Bild seiner Umgebung bzw. eines Teiles seiner Umgebung (beispielsweise in Vorwärtsrichtung) erfasst und gleichzeitig als Sensorwert beispielsweise Messwerte von entsprechenden Näherungssensoren des autonomen Fahrzeugs erfasst werden. Auf diese Weise ist es beispielsweise möglich, durch aufeinanderfolgende derartige Bild/Sensor Erfassungen ein Erscheinen und auch Analysieren von in der Umgebung des Fahrzeugs vorhandenen oder auftretenden Gegenständen, Hindernissen, Fahrbahnmarkierungen oder vergleichbaren Gegenständen oder Markierungen zu erkennen und entsprechende Konsequenzen zu ziehen, insbesondere auch betreffend die Fahrtrichtung des Fahrzeugs.

So kann beispielsweise im Rahmen des Vergleichs einer entsprechend erstellten ersten und zweiten Datenstruktur und einer nachfolgenden Ausgabe entsprechende Informationen gemäß entsprechenden vorgegebenen Kriterien, das Verfahren derart ausgebildet und eingerichtet sein, dass beispielsweise das Fahrzeug entsprechenden Hindernissen ausweichen kann bzw. entsprechenden Markierungen beispielsweise folgen kann.

Auf diese Weise kann beispielsweise ein sicheres Fortbewegen eines autonomen Fahrzeugs im Rahmen einer industriellen Anlage oder Anwendung bzw. auch im öffentlichen Straßenverkehr erreicht oder unterstützt werden. Weiterhin kann auf vergleichbare Weise auch eine Unterstützung eines Fahrers eines Fahrzeugs zum Beispiel beim Auftreten plötzlicher Hindernisse oder zum Halten einer entsprechenden Fahrspur erreicht werden.

Im Falle der Überwachung der Bewegung eines Fahrzeugs kann beispielsweise ein vorgegebenes oder vorgebbares Kriterium zur Ausgabe einer Information derart ausgewählt werden, dass bei Auftreten einer Gefahrensituation, beispielsweise eines Gegenstands oder einer Person im geplanten Fahrweg, eine entsprechende Information ausgegeben wird. Eine solche Information kann beispielsweise eine Warnmeldung an einen Fahrer oder auch eine Steuermeldung an das Fahrzeug bzw. einen Fahrzeug-Controller sein, die beispielsweise dazu ausgebildet sein kann das Fahrzeug zu stoppen, seine Geschwindigkeit zu reduzieren und/oder den Fahrweg zu ändern.

Ein Verfahren gemäß der vorliegenden Beschreibung kann weiterhin auch derart ausgebildet und eingerichtet sein,
dass das Verfahren zur Analyse eines Bildes eines Gegenstands oder Lebewesens derart ausgebildet und eingerichtet ist,
- dass das Erfassen des ersten beziehungsweise zweiten Bildes als Erfassen eines ersten beziehungsweise zweiten Bildes des Lebewesens oder Gegenstands, oder jeweils eines Bereichs davon, ausgebildet und eingerichtet ist, und
- dass das Erfassen des mindestens einen ersten beziehungsweise zweiten Sensorwerts als Erfassen mindestens eines ersten beziehungsweise mindestens eines zweiten Sensorwerts bezüglich des Lebewesens oder Gegenstands, oder jeweils eines Bereichs davon, ausgebildet und eingerichtet ist.

Dabei können Bilder von Gegenständen beispielsweise zur Qualitätsprüfung dieser Gegenstände verwendet werden, indem beispielsweise auf eine korrekte einzuhaltende Form oder Veränderungen bezüglich einer Form des Gegenstands geprüft wird. Weiterhin können beispielsweise auf diese Weise Gegenstände daraufhin geprüft werden, ob es sich um Fälschungen handelt, indem vermittels eines Verfahrens gemäß der vorliegenden Beschreibung auf entsprechende Unterschiede zu einem ebenfalls vorliegenden Original oder dem Bild eines Originals geprüft wird. Entsprechende Sensorwerte können in diesem Zusammenhang beispielsweise eine Temperatur, ein Farbwert, eine Oberflächeneigenschaft oder eine sonstige Eigenschaft des Gegenstandes sein. Weiterhin können beispielsweise entsprechende optische Bilder oder auch Röntgen- oder sonstige Bilder eines entsprechenden Gegenstands sein.

Die Analyse von Bildern von Lebewesen kann beispielsweise im Rahmen der medizinischen Diagnose von Menschen oder Tieren herangezogen werden. Dabei können beispielsweise optische Bilder, Röntgenbilder, MRT-Bilder oder vergleichbare Bilder verwendet werden. Entsprechende Sensorwerte können beispielsweise eine Körpertemperatur, eine Pulsfrequenz, ein Pulsschlag, ein akustischer Wert (z.B. ein Atem- oder Lungengeräusch-Wert, ein bei einem Husten aufgenommener akustischer Wert, ein EKG-Wert, eine Hautfarbe, ein Durchblutungswert oder vergleichbare Sensorwerte sein.

Im Rahmen eines Verfahrens zur Analyse von Bildern eines Gegenstands oder Lebewesens kann beispielsweise das vorgegebene oder vorgebbare Kriterium zur Ausgabe einer Information derart ausgebildet und eingerichtet sein, dass beispielsweise eine entsprechende Warnmeldung bei einem fehlerhaften Gegenstand oder beim Vorliegen eines unnatürlichen Zustands bzw. einer Krankheit eines Lebewesens ausgegeben wird. Eine derartige Information kann beispielsweise eine entsprechende Warnmeldung an einen Benutzer oder eine entsprechende automatische Alarmmeldung an ein Alarmsystem sein oder umfassen. Weiterhin können Informationen auch entsprechende Steuerbefehle oder Steuermeldungen sein, welche automatisch beispielsweise bestimmte Zustände herbeiführen bzw. kritische Geräte abschalten.

Die vorstehend genannte Aufgabe wird weiterhin gelöst durch ein Verfahren zur Analyse von akustischen Informationen mit zugeordneten skalaren Werten, umfassend die Verfahrensschritte,
a.) Erfassen einer ersten akustischen Information bezüglich einer akustischen Quelle und Erfassen mindestens eines ersten skalaren Sensorwerts bezüglich der akustischen Quelle,
b.) Erfassen einer zweiten akustischen Information bezüglich der akustischen Quelle oder einer zweiten akustischen Quelle und Erfassen mindestens eines zweiten skalaren Sensorwerts bezüglich der akustischen Quelle oder der zweiten akustischen Quelle,
c.) Transformieren des ersten akustischen Datensatzes in den Frequenzraum und Einbringen dieses frequenztransformierten ersten akustischen Datensatzes sowie des mindestens einen ersten skalaren Sensorwerts als konsistente Repräsentationsform in eine erste Datenstruktur, und
   Transformieren des zweiten akustischen Datensatzes in den Frequenzraum und Einbringen dieses frequenztransformierten zweiten akustischen Datensatzes sowie des mindestens einen zweiten skalaren Sensorwerts als konsistente Repräsentationsform in eine zweite Datenstruktur,
d.) Vergleichen der ersten und zweiten Datenstruktur, und
e.) Ausgabe einer Information, wenn der Vergleich einen Unterschied ergibt, der einem vorgegebenen oder vorgebbaren Kriterium entspricht.

Eine akustische Information kann beispielsweise jede akustische Aufnahme und/oder alle sonstigen akustischen Daten sein, die beispielsweise in einer elektronischen Speichereinrichtung gespeichert oder speicherbar sind oder auch in ein elektronisch speicherbares Format umwandelbar sind. Solche akustischen Informationen können beispielsweise Ton-Aufnahmen, mit einem Mikrofon erfasste akustische Daten oder auf sonstige Weise erfasste (z.B. optisch oder durch Druckmessungen) akustische Daten sein.

Die Speicherung solcher akustischer Informationen kann in jedem geeigneten Format erfolgen, z.B. in einem sogenannten "WAV"-Format (bzw. als ".wav" Datei), einem sogenannten "MP3"-Format (MPEG-1 Audio Layer 3; bzw. als ".mp3" Datei), einem sogenannten "WMA"-Format (Windows Media Audio; bzw. als ".wma" Datei), einem sogenannten "AAC"-Format (Advanced Audio Coding; bzw. als ".aac" Datei), einem sogenannten "OGG"-Format (Ogg Vobis; bzw. als ".ogg" Datei), einem "FLAC"-Format (Free Lossles Audio Codec; bzw. als ".flac" Datei), einem "RM"-Format (Real Media; bzw. als ".rm" Datei) oder jedem beliebigen geeigneten, vergleichbaren Format.

Die akustische Quelle bzw. die zweite akustische Quelle kann beispielsweise eine Maschine, ein Motor, eine bestimmte Situation, ein geographischer Ort, ein oder mehrere Lebewesen oder jede weitere Quelle akustischer Informationen sein.

Eine entsprechende akustische Information kann dabei beispielsweise eine Tonaufnahme bezüglich einer der genannten akustischen Quellen bzw. von bestimmten Teilen davon sein. Dabei kann die Erfassung einer solchen Tonaufnahme beispielsweise mit einem entsprechenden Mikrofon erfolgen. Weiterhin kann die Erfassung der akustischen Information auch mit weiteren geeigneten Mitteln, z.B. über optische Methoden zur Schwingungserfassung oder auch Methoden zur Erfassung von Druckschwankungen erfolgen.

Beispielsweise kann eine entsprechende Tonaufnahme auch nur in einem speziellen akustischen Frequenzbereich aufgenommen sein oder unter Verwendung eines bestimmten akustischen Filters. Dabei können die akustischen Daten von einem akustischen Sensor herrühren bzw. aufgenommen sein oder sich aus Daten mehrerer dieselbe Quelle betreffenden Sensoren zusammensetzen.

Entsprechend zugeordnete Sensordaten können beispielsweise entsprechende Temperaturdaten oder Leistungsdaten (z.B. Strom- oder Leistungsverbrauch) einer entsprechenden Maschine oder eines entsprechenden Motors sein. Weiterhin können entsprechende Sensordaten z.B. weitere Sensordaten bezüglich einer entsprechenden Situation (z.B. eine Uhrzeit, ein Helligkeitswert, eine Temperatur, ein Feuchtigkeitswert usw.), eines geographischen Orts (z.B. ein GPS-Wert, eine Ortsangabe, eine Adresse, eine Uhrzeit, ein Helligkeitswert, eine Temperatur, ein Feuchtigkeitswert usw.) oder eines oder mehrerer Lebewesen (z.B. einer Anzahl, einer Temperatur, einer Uhrzeit, usw.) sein.

Dabei kann der mindestens eine erste und zweite skalare Sensorwert, die konsistente Repräsentationsform der ersten und zweiten Datenstruktur, der Vergleich der ersten und zweiten Datenstruktur sowie die Ausgabe einer Information, wenn der Vergleich einen Unterschied ergibt, der einem vorgegebenen oder vorgebbaren Kriterium entspricht, gemäß der vorliegenden Beschreibung eingerichtet und ausgestaltet sein.

Das vorstehend genannte Verfahren kann weiterhin derart ausgebildet und eingerichtet sein,
dass das Verfahren weiterhin gemäß den Merkmalen von einem oder mehreren der Ansprüche 3 bis 6 ausgebildet und eingerichtet ist.

Weiterhin kann das vorstehend genannte Verfahren derart ausgebildet und eingerichtet sein,
dass das Verfahren zur Überwachung eines Verfahrensablaufs oder Produktionsablaufs derart ausgebildet und eingerichtet ist,
- dass das Erfassen der ersten beziehungsweise zweiten akustischen Information als akustische Aufnahme betreffend eines in den Produktionsablauf involvierten Gegenstands oder einer Situation bezüglich des Produktions- oder Verfahrensablaufs ausgebildet und eingerichtet ist, und
- dass das Erfassen des mindestens einen ersten beziehungsweise zweiten skalaren Sensorwerts als Erfassen mindestens eines Werts vermittels eines Sensors betreffend den in den Produktionsablauf involvierten Gegenstand oder die Situation bezüglich des Produktions- oder Verfahrensablaufs ausgebildet und eingerichtet ist.

Dabei können der Sensor, die Erfassung entsprechender Sensorwerte, der mindestens eine erste bzw. zweite skalare Sensorwert, der in den Produktionsablauf involvierte Gegenstand sowie die Situation bezüglich des Produktions- oder Verfahrensablaufs gemäß der vorliegenden Beschreibung ausgebildet und eingerichtet sein.

Weiterhin können beispielsweise in den Produktionsablauf involvierte Gegenstände an der Produktion beteiligte Geräte oder Maschinen sein, von welchen im Rahmen des vorliegenden Verfahrens entsprechende akustische Informationen beispielsweise über entsprechende Mikrofone oder vergleichbare Einrichtungen aufgenommen werden. Vermittels entsprechender Sensoren können dann parallel zu diesen akustischen Aufnahmen auch weitere Parameter dieser Maschinen oder Geräte, wie beispielsweise Leistungsdaten, Temperaturen, Geschwindigkeiten, Steuerparameter o. ä. erfasst werden.

Weiterhin können beispielsweise im Produktionsablauf vorliegende Ausgangs-, Zwischen- und/oder Endprodukte in den Produktionsablauf involvierte Gegenstände sein. Dabei können beispielsweise entsprechende akustische Informationen solcher Zwischenprodukte (Z. B. Schwingungsdaten oder auch Siede- oder Fließgeräusche) erfasst werden und diesen dann im Rahmen eines Verfahrens gemäß der vorliegenden Beschreibung entsprechende Sensordaten (beispielsweise Temperaturen, Fließgeschwindigkeiten, chemische Zusammensetzungen betreffend das entsprechende Zwischenprodukt) zugeordnet werden.

Ein in den Produktionsablauf involvierter Gegenstand kann beispielsweise als ein End- oder Zwischenprodukt eines Produktionsverfahrens ausgestaltet sein. Weiterhin kann ein in den Produktionsablauf involvierter Gegenstand beispielsweise eine Anlagen- oder Gerätekomponente beziehungsweise ein Anlagen- oder Geräteteils einer im Rahmen des Produktionsverfahrens verwendeten Anlage beziehungsweise eines verwendeten Geräts ausgestaltet und eingerichtet sein.

Weiterhin kann die Situation bezüglich des Produktions- oder Verfahrensablaufs einem Verfahrensablauf zugeordnet sein, z.B. einer Situation innerhalb einer Brennkammer einer Gasturbine entsprechen. Vermittels entsprechender akustischer Informationen (z.B. Verbrennungsgeräusche) können unter Verwendung eines Verfahrens gemäß der vorliegenden Beschreibung beispielsweise Anomalien innerhalb eines solchen Verbrennungsverfahrens detektiert werden. Als mindestens ein zugeordneter Sensorwert könnte dann in diesem Fall z.B. eine Zeitreihe der Leistung der Gasturbine herangezogen werden. Weiterhin kann ein Verfahren zur Analyse von akustischen Informationen mit zugeordneten skalaren Werten gemäß der vorliegenden Beschreibung auch derart ausgebildet und eingerichtet sein, dass das Verfahren zur Analyse medizinischer akustischer Daten, wie beispielsweise akustische Daten eines Lebewesens (Z. B. ein Lungengeräusch oder ein Hust-Geräusch), ausgebildet und eingerichtet ist, in diesem Fall könnte beispielsweise die 1. und 2. akustische Information eine akustische Information (Z. B. Ein Lungengeräusch oder ein Hust-Geräusch) eines Menschen oder Tieres sein und die entsprechenden weiteren skalaren Sensorwerte weitere beispielsweise medizinische Sensorwerte bezüglich des Menschen oder Tieres sein, wie beispielsweise eine Körpertemperatur, eine Pulsfrequenz oder Ähnliches.

Weiterhin kann ein Verfahren zur Analyse von akustischen Informationen mit zugeordneten skalaren Werten gemäß der vorliegenden Beschreibung auch zu einer Personenerkennung oder - Identifikation ausgebildet und eingerichtet sein. In einem solchen Fall kann beispielsweise die 1. und 2. akustische Information eine Tonaufnahme bezüglich einer Person sein (Z. B. eine Sprachaufnahme) und der 1. und 2. Sensorwert weiterhin ein für diese Person charakteristischer Wert, wie beispielsweise ein Ortswert (Z. B. Eine GPS-Koordinate), ein eingegebener Code, eine Augenfarbe, oder ein vergleichbarer Wert sein.

Weitere vorteilhafte Ausgestaltungen finden sich in den Unteransprüchen.

Nachfolgend wird die vorliegende Erfindung beispielhaft mit Bezug auf die beigefügten Figuren näher erläutert.

Es zeigen:
Figur 1: Schematische Darstellung einiger Phasen eines beispielhaften Prozessablaufs zur Wicklung einer Batteriezelle sowie die Ermittlung zugehöriger Prozessparameter für die nachfolgende Analyse;
Figur 2: Beispielhafte, schematische Darstellung des Ablaufs zur Erstellung eines geclusterten Auswerte-Graphen bezüglich einer ersten gewickelten Batteriezelle;
Figur 3: Beispielhafte, schematische Darstellung des Ablaufs zur Erstellung eines geclusterten Auswerte-Graphen bezüglich einer zweiten Batteriezelle;
Figur 4: Beispielhafte schematische Darstellung des Ablaufs eines Vergleichs des ersten und zweiten Auswerte-Graphen.

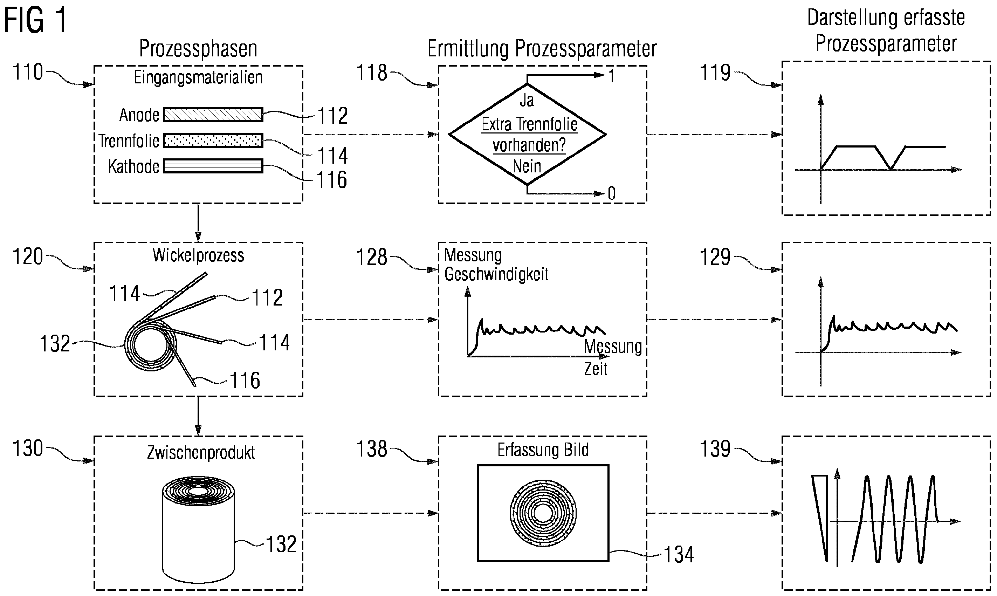

In den Figuren 1-4 ist ein Ausführungsbeispiel für ein Verfahren gemäß der vorliegenden Beschreibung dargestellt, bei welchem das Verfahren zur Qualitätskontrolle im Rahmen eines Teils eines Herstellungsprozesses einer Batterie eingesetzt wird. Dabei kann während des Produktionsprozesses anhand der Analyse von Bild- und Sensordaten zu verschiedenen hergestellten Batteriezellen, die ein Zwischenprodukt des Herstellungsprozesses der Batterie darstellen, ein Hinweis auf eine Änderung der Produktionsqualität vorhergesagt werden. Beim vorliegenden Beispiel handelt es sich demnach um ein Beispiel für ein Verfahren gemäß der vorliegenden Beschreibung zur Analyse von Bild-Informationen mit zugeordneten skalaren Werten bezüglich einer Situation.

Figur 1 zeigt im linken Bildteil drei Prozessphasen eines Prozesses zum Aufwickeln von Folienschichten 112, 114, 116 zur Herstellung einer gewickelten Batteriezelle 132, die ein Zwischenprodukt im Rahmen einer entsprechenden Batterieherstellung darstellt.

Im Rahmen der Figuren 1-4 wird nun anhand dieses Beispiels erläutert, wie mit Hilfe einer beispielhaften Ausgestaltung eines Verfahrens gemäß der vorliegenden Beschreibung eine Qualitätsprüfung des Aufwickelns der Folienschichten 112, 114, 116 zur Herstellung der gewickelten Batteriezelle 132 erreicht werden kann.

Die im linken Teil von Figur 1 dargestellten drei Prozessphasen bestehen aus einer ersten Phase 110, die eine Bereitstellung von Eingangs- bzw. Ausgangsmaterialien, die zur Herstellung einer Batteriezelle im Rahmen des dargestellten Prozessablaufs verwendet werden. Als Eingangsmaterialien werden dabei eine ein Anodenfolie 112, eine Trennfolie 114 sowie eine Kathodenfolie 116 bereitgestellt, welche als eine Schichtstruktur einem nachfolgenden Wickelprozess 120 zur Verfügung gestellt werden, welcher in Figur 1 im linken Bildteil in der Mitte dargestellt ist.

Im Rahmen dieses nachfolgenden Wickelprozesses 120 sind sowohl die zur Verfügung gestellten Folien, die Trennfolie 114, die Anodenfolie 112, wiederum eine Trennfolie 114 sowie die Kathodenfolie 116, als auch die durch das Aufwickeln dieser Folien 114, 112, 116 hergestellte Batteriezelle 132 dargestellt.

In einer weiterhin im linken Teil von Figur 1 dargestellten dritten Prozessphase 130 ist das fertige Zwischenprodukt, die aufgewickelte Batteriezelle 132, dargestellt. Diese wird nun zur Fertigung einer einsatzfähigen Batterie weiterverarbeitet, was in Figur 1 nicht dargestellt ist, und auch nicht Teil des vorgestellten Beispiels ist.

In der mittleren Spalte von Figur 1 ist schematisch dargestellt, wie im Rahmen der erläuterten Prozessphasen 110, 120, 130 entsprechende Prozess- und Sensorparameter ermittelt werden. In einem ersten Ermittlungsschritt 118 wird ein Parameter ermittelt, der beinhaltet, ob eine zusätzliche Trennfolie 114 beim aufgewickelt der Folien 112, 114, 116 im Verfahrensschritt 120 eingesetzt wird. Wird eine solche zusätzliche Trennfolie 114 eingesetzt, wird der entsprechende Prozessparameter auf eins gesetzt, ansonsten ist er null.

In einer mittleren Abbildung 128 der mittleren Spalte in Figur 1 ist die Ermittlung mindestens einer Wickelgeschwindigkeit 128, die ein Beispiel für einen Sensorwert gemäß der vorliegenden Beschreibung ist, bezüglich des Wickelprozesses 120 dargestellt. Zur Ermittlung dieser Wickelgeschwindigkeit wird eine Zeitreihe erfasst, bei welcher die Wickelgeschwindigkeit beim Aufwickeln der Batteriezelle 132 im Rahmen des Wickelprozesses 120 zu verschiedenen Zeitpunkten während dieses Wickelprozesses 120 erfasst wird.

Figur 1 zeigt weiterhin in einer unteren Darstellung 138 die Erfassung 138 eines Bildes 134 der Frontseite der gewickelten Batteriezelle 132. Dabei wird dieses Bild 134 derart aufgenommen, dass die aufgewickelte Schichtstruktur erkennbar ist.

Im rechten Bildteil von Figur 1 sind dann Darstellungen 119, 129, 139 gezeigt, welche jeweils Darstellungen der erfassten Prozessparameter 119, Sensorparameter 129 und Bildinformationen 139 zeigen.

Die in Verfahrensschritt 118 ermittelten Prozessparameter sind in der Darstellung 119 in vertikaler Richtung über der Zeit, die in horizontaler Richtung aufgetragen ist, dargestellt.

Weiterhin sind die im Verfahrensschritt 128 erfassten Wickelgeschwindigkeiten in einer entsprechenden Darstellung 129 auf der vertikalen Achse über der auf der horizontalen Achse aufgetragenen jeweils ermittelten Zeit aufgetragen.

In der untersten rechten Darstellung 139 in Figur 1 ist eine schematische Darstellung 139 des Ergebnisses einer Frequenztransformation des Bildes 134 dargestellt. Dabei wird im vorliegenden Ausführungsbeispiel zur Frequenztransformation des Bildes 134 eine sogenannte "Diskrete-Cosinus-Transformation" (DCT) eingesetzt, wie sie auch beispielsweise im Rahmen der sogenannten JPEG-Kompression von Bildern standardmäßig zur Frequenztransformation des zu komprimierenden Bildes eingesetzt wird. Symbolisch ist in der Darstellung 139 des frequenztransformierten Bildes nur eine der harmonischen Wellen in einer Richtung dargestellt.

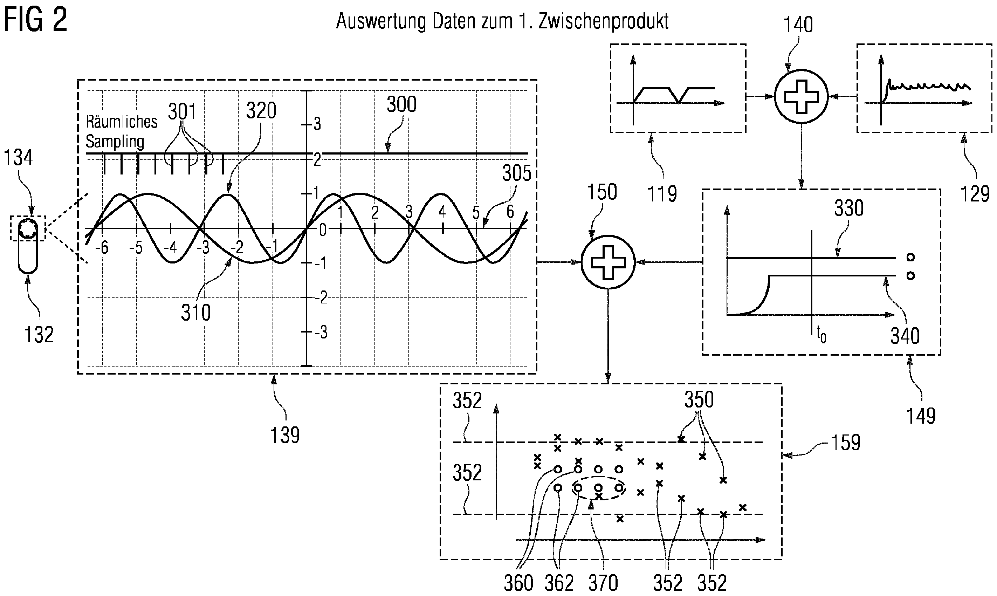

Die Figuren 2 bis 4 zeigen nun die Auswerteschritte, die die vorstehend genannte Qualitätsprüfung der Batteriezellen ermöglichen.

Dabei wird anhand von Figur 2 erläutert, wie anhand eines bezüglich einer ersten gewickelten Batteriezelle 132 erfassten Bildes 134 sowie der im Rahmen der entsprechenden Wicklung ermittelte Prozessparameter 119 sowie Wickelgeschwindigkeiten 129 ein erstes Auswerte-Diagramm 159 bezüglich der ersten gewickelten Batteriezelle 132 erstellt wird. Dabei ist die erste gewickelte Batteriezelle 132 ein Beispiel für ein erstes Zwischenprodukt gemäß der vorliegenden Beschreibung und das erste Auswerte-Diagramm 159 ein Beispiel für eine konsistente Repräsentationsform einer ersten Datenstruktur gemäß der vorliegenden Beschreibung.

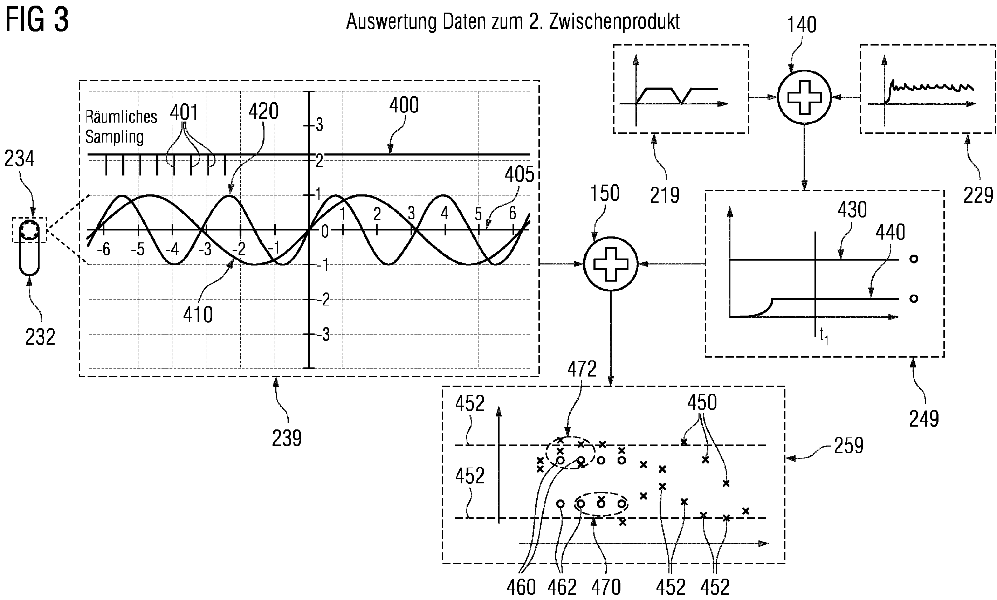

Anhand von Figur 3 wird dann entsprechend die Erstellung eines zweiten Auswerte-Diagramms 259 bezüglich einer zweiten gewickelten Batteriezelle 232 anhand eines entsprechend aufgenommenen Bildes 238 sowie unter Verwendung von bei der Wicklung ermittelten Prozessparametern 219 sowie Wickelgeschwindigkeiten 229 erläutert. Dabei ist die zweite gewickelte Batteriezelle 232 ein Beispiel für ein zweites Zwischenprodukt gemäß der vorliegenden Beschreibung und das zweite Auswerte-Diagramm 259 ein Beispiel für eine konsistente Repräsentationsform einer zweiten Datenstruktur gemäß der vorliegenden Beschreibung.

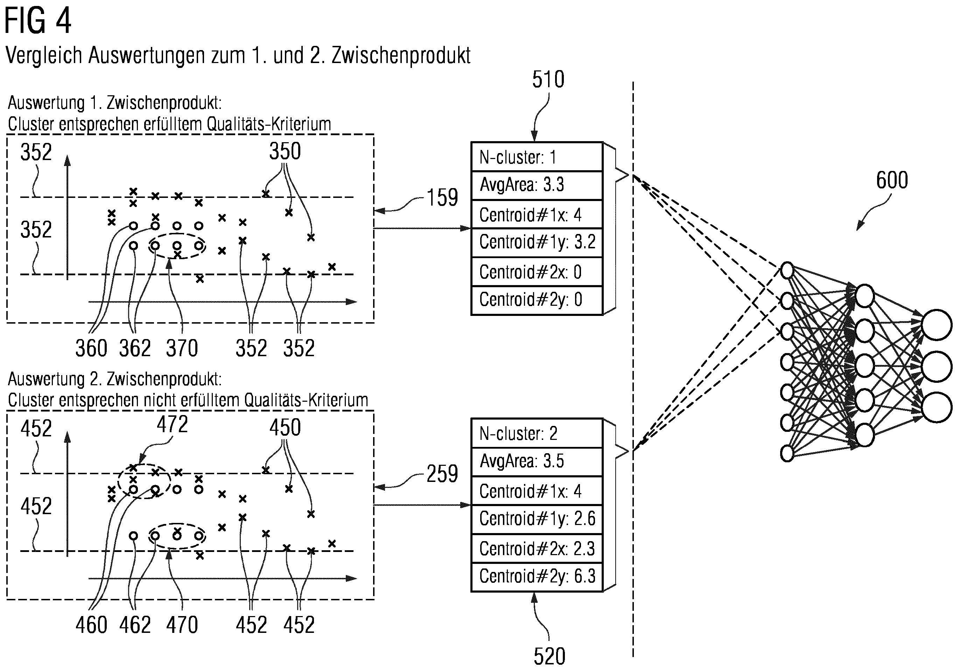

Nachfolgend wird dann anhand von Figur 4 der Vergleich der erstellten Auswerte-Diagramme 159, 259 zur Prüfung einer Qualität der gewickelten Batteriezellen 132, 232 näher erläutert.

Es folgt nun eine detaillierte Beschreibung des in Figur 2 dargestellten Verfahrensablaufs. Figur 2 stellt, wie bereits erwähnt, die Erstellung eines ersten Auswerte-Diagramms 159 bezüglich der im Rahmen des in Figur 1 dargestellten Prozesses ermittelten Prozess-, Sensor- und Bildwerte dar. Dieses Auswerte-Diagramm 159 ist ein Beispiel für eine konsistente Repräsentationsform einer ersten Datenstruktur gemäß der vorliegenden Beschreibung am Beispiel des im Rahmen von Figur eins vorgestellten Prozessablaufs bzw. der dabei ermittelten Prozess-, Sensor- und Bildwerte.

In einem ersten Erstellungsschritt 140 zur Erstellung des ersten Auswerte-Diagramms 159 werden zuerst die bezüglich der Wicklung der ersten Batteriezelle 132 ermittelten Parameterwerte 119 sowie die ermittelten Wickelgeschwindigkeitswerte 129 in ein einheitliches Parameterdaten-Diagramm 149 gebracht. Dafür werden die Parameterwerte 119 sowie die Wickelgeschwindigkeit 129 entsprechend normiert. Im vorliegenden Beispiel kann dies beispielsweise derart ausgestaltet sein, dass der Wert "1" für den Parameterwert "zusätzliche Folie ist vorhanden" einem Mittelwert der ermittelten Winkelgeschwindigkeit in 129 gleichgesetzt wird.

In dem einheitlichen Parameterdaten-Diagramm 149 sind nun die normierte Wickelgeschwindigkeit 340 über einer Zeitachse sowie der beim Wickeln der ersten Batteriezelle 132 vorliegende Parameterwert 330 entsprechend normiert über die Zeitachse aufgetragen.

In einem nachfolgenden zweiten Erstellungsschritt 150 werden nun das gerade erstellte einheitliche Parameterdatendiagramm 149 sowie Daten aus dem frequenztransformierten Bild 139 in ein einheitliches Format gebracht, um dann das erste Auswerte-Diagramm 159 zu erstellen.

Dabei ist für das frequenztransformierte Bild 139 der ersten Batteriezelle 132 eine Darstellung gewählt, bei welcher einzelne harmonischen Wellen 320, 310 der Frequenztransformation auf einer räumlichen Achse 305 dargestellt sind. Die räumliche Achse 305 kann allgemein einem Schnitt entlang einer vorgegebenen Richtung durch das erfasste Bild 134 entsprechen oder auch einem Ausschnitt daraus. In Figur 2 ist ein Ausschnitt eines horizontalen Schnitts durch das aufgenommene Bild 134 gezeigt.

Die Darstellung des frequenztransformierten Bildes 139 auf der linken Seite von Figur 2 ist eine vereinfachte Darstellung eines ersten frequenztransformierten Bildes 139 einer ersten Batteriezelle 132, die im Rahmen des in Figur 1 vorgestellten Prozessablaufs hergestellt wurde. Diese Vereinfachung ist aus Gründen der Übersichtlichkeit vorgenommen worden. Die Vereinfachung besteht darin, dass bezüglich der verwendeten DCT-Transformation eines Bildes, die üblicherweise in zwei Richtungen erfolgt, in der Darstellung 139 nur eine Komponente davon dargestellt ist. Weiterhin ist eine weitere Vereinfachung, dass nur eine erste harmonische Frequenz 310 sowie eine zweite harmonische Frequenz 320 der erfolgten DCT-Transformation in der Darstellung 139 gezeigt sind. Die beiden exemplarisch dargestellten harmonischen Wellen 310, 320 sind in der Darstellung 139 in Figur 2 über der räumlichen Achse 305 aufgetragen, wobei die Phasenverschiebung und Periodenlänge dieser harmonischen Wellen 310, 320 jeweils ein Ergebnis der DCT-Transformation sind.

Für die Erstellung des ersten Auswerte-Diagramms werden die Daten des frequenztransformierten Bildes 139 mit einer bestimmten räumlichen Sampling-Frequenz bzw. räumlichen Abtastfrequenz abgetastet und diese Abtastwerte dann zur Erstellung des ersten Auswerte-Diagramms 159 verwendet. Dazu ist im frequenztransformierten Bild 139 weiterhin eine zweite räumliche Achse 300 eingetragen, auf welcher symbolisch eine Auswahl von Abtastpunkten 301 dargestellt ist, an welchen jeweils die einzelnen harmonischen Wellen 310, 320 des in den Frequenzraum transformierten Bildes abgetastet werden. Dabei kann als räumliche Abtastfrequenz beispielsweise die doppelte räumlichen Frequenz der höchsten im frequenztransformierten Bild dargestellten harmonischen Schwingung verwendet werden.

Abtastwerte für die erste harmonische Welle 310 sind als Kreuze dargestellte Datenpunkte 352 im ersten Auswerte-Diagramm 159 eingezeichnet. Ebenso sind Abtastwerte für die zweite harmonische Welle 320 als Kreuze dargestellte Datenpunkte 350 im ersten Auswerte-Diagramm 159 eingezeichnet. Weiterhin werden im Rahmen des zweiten Erstellungsschritts 150 zu einem vorgegebenen oder vorgebbaren Zeitpunkt T₀ jeweils ein Parameterwert 360 sowie ein Wickelgeschwindigkeitswert 362 aus dem einheitlichen Parameterdatendiagramm 149 entnommen. Dabei kann der Zeitpunkt T₀ beispielsweise dem Zeitpunkt der Aufnahme des Bilds 134 der gewickelten Batteriezelle 132 entsprechen oder auch beispielsweise davor liegen. Dabei kann dieser davorliegende Zeitpunkt beispielsweise so ausgewählt sein, dass die jeweiligen Parameter bzw. Wickelgeschwindigkeitswerte während des Aufwickelns der Batteriezelle 132 vorlagen.

Um diese Parameter- und Wickelgeschwindigkeitswerte in das erste Auswerte-Diagramm 159 zu integrieren werden nun obere und untere Wert-Grenzlinien 352 ermittelt. Dies geschieht dadurch, dass eine maximale und eine minimale Amplitudensumme aller harmonischen Wellen des frequenztransformierten Bilds ermittelt wird und diese als obere und untere Grenzwerte 352 verwendet werden. Dies ist in Figur 1 im ersten Auswerte-Diagramm 159 als gestrichelte Linien 352 eingezeichnet. Diese Grenzlinien 352 geben den Maßstab vor, innerhalb dessen der zum Zeitpunkt T₀ vorliegende Parameterwert 360 sowie der zum Zeitpunkt T₀ vorliegende Wickelgeschwindigkeitswert 362 eingetragen werden. Dabei wird jeder der Werte 360, 362 auf der horizontalen räumlichen Achse des ersten Auswerte-Diagramms 159 zu jedem der Abtastpunkte 301 wiederholt eingetragen, wie dies in Figur 2 in der Darstellung des ersten Auswerte-Diagramms 159 an einigen Beispielen dargestellt ist.

Auf diese Weise enthält das erste Auswerte-Diagramm 159 nun sowohl Daten des von der gewickelten Batteriezelle 132 aufgenommenen Bildes 134 als auch Daten bezüglich der Anwesenheit einer zusätzlichen Zwischenfolie 114 sowie der Wickelgeschwindigkeit beim Aufwickeln der Batteriezelle 132.

Zur Vorbereitung eines Vergleichs des ersten Auswerte-Diagramms 159 mit einem zweiten Auswerte-Diagramm 259 wird nun noch ein Clustering Verfahren gemäß dem Stand der Technik auf die gesamte Datenpunkt-Menge des ersten Auswerte-Diagramms 159 angewendet. Im vorliegenden Beispiel wurde dabei nur ein Cluster 370 ermittelt, welches als gestrichelte Linie im ersten Auswerte-Diagramm 159 eingezeichnet ist.

Figur 3 stellt nun die Erstellung des zweiten Auswerte-Diagramms 259 dar, welches anhand von Daten eines zweiten aufgenommenen Bildes 234 von einer zweiten gewickelten Batteriezelle 232 sowie Parameterdaten 219 bezüglich der Anwesenheit einer zusätzlichen Zwischenfolie 114 bei der Herstellung der zweiten gewickelten Batteriezelle 232 und Wickelgeschwindigkeitswerten 229, die im Rahmen der Wicklung der Batteriezelle 232 aufgenommen wurden, erstellt wurde. Dabei läuft die Erstellung des zweiten Auswerte-Diagramms 259 entsprechend der Erstellung des ersten Auswerte-Diagramms 159 ab. Die zweite Batteriezelle 232 stellt im Rahmen des vorliegenden Ausführungsbeispiels ein zweites Zwischenprodukt dar.

Dabei werden wieder zur Erstellung des zweiten Auswerte-Diagramms 259 die Parameterwerte 219 und die Wickelgeschwindigkeit Werte 229 in einem ersten Erstellungsschritt 140 normiert und in ein entsprechendes einheitliches Datendiagramm 249 umgewandelt. In diesem sind die normierten Parameterwerte 430 und die normierten Wickelgeschwindigkeitswerte 440 über der Zeit aufgetragen.

Dann wird das aufgenommene Bild 234 der Batteriezelle 232 wiederum mit dem DCT-Verfahren frequenztransformiert, was in Figur 3 als frequenztransformiertes Bild 239 dargestellt ist. Hierbei sind exemplarisch wieder eine erste harmonische Welle 410 sowie eine zweite harmonische Welle 420 über einer räumlichen Achse 405 dargestellt, wobei die harmonischen Wellen 410, 420 eine Auswahl der im Rahmen des DCT-Verfahrens betrachteten Wellen bzw. Frequenzen darstellen. Auch hier kann die räumliche Achse 405 kann allgemein einem Schnitt entlang einer vorgegebenen Richtung durch das erfasste Bild 234 entsprechen oder auch einem Ausschnitt daraus. In Figur 3 ist wiederum ein Ausschnitt eines horizontalen Schnitts durch das aufgenommene Bild 234 gezeigt. Die beiden exemplarisch dargestellten harmonischen Wellen 410, 420 sind in der Darstellung 239 in Figur 3 über der räumlichen Achse 405 aufgetragen, wobei wiederum die Phasenverschiebung und Periodenlänge dieser harmonischen Wellen 410, 420 jeweils ein Ergebnis der DCT-Transformation sind.

Wie vorstehend bereits erwähnt, ist auch hier aus Gründen der Übersichtlichkeit, wie bereits bei der Darstellung des frequenztransformierten Bildes 139 bezüglich des ersten Zwischenprodukts 132, nur eine Dimension der Frequenztransformation dargestellt.

Zur Erstellung des zweiten Auswerte-Diagramms 259 werden nun die beiden dargestellten harmonischen Wellen 410, 420 wieder zu entsprechenden Abtastpunkten 401 abgetastet, wobei eine Auswahl der Abtastpunkte 401 in Figur 3 in der Darstellung des frequenztransformierten Bildes 239 entlang einer weiteren räumlichen Achse 400 dargestellt sind.

Die im Rahmen dieser Abtastung ermittelten Datenpunkte bezüglich der ersten harmonischen Welle 410 sind im zweiten Auswerte Bild-Diagramm 259 als Kreuze eingezeichnete Datenpunkte 452 eingetragen. Die vermittels dieser Abtastung ermittelten Datenpunkte bezüglich der zweiten harmonischen Welle 420 sind im zweiten Auswerte-Diagramm 259 als Kreuze dargestellte Datenpunkte 450 dargestellt.

Weiterhin wird zur Erstellung des zweiten Auswerte-Diagramms 259 nun zur Integration der Parameter- und Wickelgeschwindigkeitswerte eine obere und untere Grenzlinie 452 wiederum vermittels der Bestimmung einer maximalen und minimalen Amplitudensumme der durch die DCT-Transformation ermittelten harmonischen Wellen gesucht. Innerhalb dieses Rahmens wird ein zu einem Zeitpunkt T₁ aus dem einheitlichen Datendiagramm 249 entnommener Parameterwert 460 sowie ein dem einheitlichen Datendiagramm 249 entnommener Wickelgeschwindigkeitswert 262 zum Zeitpunkt T₁ eingetragen. Dabei werden der Parameterwert 460 sowie der Wickelgeschwindigkeitswert 262 in das zweite Auswerte-Diagramm 259 mehrfach jeweils zu den Abtastpunkten 401 eingetragen - entsprechend wie beim ersten Auswerte-Diagramm 159.

Wiederum wird zum Vorbereiten eines Vergleichs des ersten und zweiten Auswerte-Diagramms auf die Gesamtheit der Datenpunkte 450, 452, 460, 462 des zweiten Auswerte-Diagramms 259 ein Clustering-Verfahren angewendet. Dabei ergeben sich in diesem Fall zwei Cluster, die durch gestrichelte Linien 470, 472 in Figur 3 im zweiten Auswerte-Diagramm 259 eingezeichnet sind.

Figur 4 zeigt nun das erste Auswerte-Diagramm 159 sowie das zweite Auswerte-Diagramm 259, wobei die Bezugszeichen innerhalb beider Auswerte-Diagramme 159, 259 den Bezugszeichen gemäß den Figuren 2 und 3 entsprechen.

Figur 4 zeigt jetzt eine aus dem Clustering bezüglich des ersten Auswerte-Diagramms 159 abgeleitete Clusteranalyse 510, aus welcher sich sowohl die Anzahl der Cluster, deren durchschnittliche Fläche als auch die Koordinaten eines jeweiligen Zentrums bzw. Zentroids jedes der ermittelten Cluster ergibt. Ebenso zeigt Figur 4 eine aus dem Clustering bezüglich des zweiten Auswerte-Diagramms 259 abgeleitete Clusteranalyse 520, aus welcher sich ebenfalls die Anzahl der Cluster, deren durchschnittliche Fläche und auch die Koordinaten eines jeweiligen Zentrums bzw. Zentroids jedes der ermittelten Cluster ergibt.

Im vorliegenden Beispiel entspricht die Herstellung der ersten Batteriezelle 132 einer vorschriftsmäßigen Herstellung, wogegen bei der Herstellung der zweiten Batteriezelle 232 eine zu geringe Wickelgeschwindigkeit vorlag. Weiterhin ist im vorliegenden Beispiel ein vorgegebenes Kriterium zur Feststellung eines möglichen Fehlers, dass sich zwischen dem ersten und zweiten Auswerte-Diagramm 159, 259 die Anzahl der identifizierten Cluster unterscheidet. Weitere vorgegebene oder vorgebbare Kriterien zur Ausgaben einer Information könnten beispielsweise sein, dass sich die Lage mindestens eines Clusters um mindestens einen vorgegebenen oder vorgebbaren Betrag geändert hat, oder auch, dass sich die von Clustern im Mittel oder insgesamt abgedeckte Fläche um einen vorgegebenen oder vorgebbaren Betrag geändert hat.

Durch Vergleich der Clusteranalyse 510 des ersten Auswerte-Diagramms 159 mit der Clusteranalyse 520 des zweiten Auswerte Diagramms 259 kann nun, beispielsweise durch einen Computer oder auch einen Benutzer, ermittelt werden, dass sich die Clusteranzahl bei dem zweiten Auswerte-Diagramm auf zwei erhöht hat. Gemäß dem vorgegebenen Kriterium wird danach eine entsprechende Information ausgegeben, beispielsweise eine Warnmeldungen an einen Benutzer, oder auch eine entsprechende Alarm- oder Steuermeldung oder ein entsprechender Steuerbefehl an die Produktionsanlage bzw. einen Leitrechner der Produktionsanlage. Ein solcher Steuerbefehl, bzw. eine solche Alarm- oder Steuermeldung, kann beispielsweise eine Kontrolle verschiedener oder aller Maschinenparameter auslösen oder gegebenenfalls auch einen Not-Stopp der Anlage oder von Anlagenteilen.

In einer alternativen Ausgestaltung kann die Auswertung der Clusterstruktur 510 bezüglich des ersten Auswerte-Diagramms 159 und der Clusterstruktur 520 bezüglich des zweiten Auswerte-Diagramms 259 auch über ein neuronales Netz 600 ausgeführt werden. Dabei werden die jeweiligen Clusteranalysen 510, 520 in das neuronale Netz eingegeben und von dem neuronalen Netz ein Ergebnis ausgegeben, welches dann, wenn es einem entsprechenden Fehlerkriterium entspricht, wiederum eine entsprechende Informationsmeldung auslöst. Das neuronale Netz kann auch unmittelbar ausgeben, ob eine entsprechende Informationsmeldung ausgelöst werden soll oder nicht.

## Patentansprüche

1. Verfahren zur Analyse von Bild-Informationen (134, 234) mit zugeordneten skalaren Werten (119, 129, 219, 229), umfassend die Verfahrensschritte,
a.) Erfassen eines ersten Bildes (134) eines Gegenstands (132, 232) oder einer Situation (130) und Erfassen mindestens eines ersten skalaren Sensorwerts (129) bezüglich des Gegenstands (132) oder der Situation (130),
b.) Erfassen eines zweiten Bildes (234) des Gegenstands (132, 232) oder der Situation (130) und Erfassen mindestens eines zweiten skalaren Sensorwerts (229) bezüglich des Gegenstands (132, 232) oder der Situation (130),
c.) Einbringen des ersten Bilds (134) und des mindestens einen ersten skalaren Sensorwerts (129) als konsistente Repräsentationsform in eine erste Datenstruktur (159), und Einbringen des zweiten Bilds (234) und des mindestens einen zweiten skalaren Sensorwerts (229) als konsistente Repräsentationsform in eine zweite Datenstruktur (259), wobei die erste (159) und zweite Datenstruktur (259) jeweils eine zwei- oder höherdimensionale Diagramm-Struktur oder eine zwei- oder höherdimensionale Graphen-Struktur aufweist oder jeweils als ein zwei- oder höherdimensionales Diagramm oder einen zwei- oder höherdimensionalen Graph dargestellt oder darstellbar ist,
d.) Vergleichen der ersten (159) und zweiten Datenstruktur (259), und
e.) Ausgabe einer Information, wenn der Vergleich einen Unterschied ergibt, der einem vorgegebenen oder vorgebbaren Kriterium entspricht.

2. Verfahren gemäß Anspruch 1,
**dadurch gekennzeichnet,**
**dass** zum Erstellen der ersten (159) und zweiten Datenstruktur (259) das jeweils erfasste Bild (134, 234) jeweils in den Frequenzraum transformiert wird,
insbesondere, dass zum Erstellen der ersten (159) und zweiten Datenstruktur (259) das jeweils erfasste Bild (134, 234) jeweils unter Verwendung eines Verfahrens der Fourier-Analyse in den Frequenzraum transformiert wird.

3. Verfahren gemäß Anspruch 1 oder 2,
**dadurch gekennzeichnet,**
**dass** innerhalb Verfahrensschritt a.) weiterhin mindestens ein erster skalarer Parameterwert (119) bezüglich des Gegenstands (132, 232) oder Situation (130) erfasst wird, und
**dass** innerhalb Verfahrensschritt b.) weiterhin mindestens ein zweiter skalarer Parameterwert (219) bezüglich des Gegenstands oder Situation (130) erfasst wird,
wobei die erste (159) und zweite Datenstruktur (259) weiterhin unter Verwendung des mindestens einen ersten skalaren Parameterwertes (119) beziehungsweise des mindestens einen zweiten Parameterwertes (219) erstellt wird.

4. Verfahren gemäß einem der vorstehenden Ansprüche,
**dadurch gekennzeichnet,**
**dass** das Vergleichen der ersten (159) und zweiten Datenstruktur (259) unter Verwendung eines neuronalen Netzes (600) erfolgt.

5. Verfahren gemäß einem der vorstehenden Ansprüche,
**dadurch gekennzeichnet,**
**dass** im Rahmen eines Erstellens der ersten (159) und zweiten Datenstruktur (259) gemäß Verfahrensschritt c.) jeweils ein Clustering-Verfahren auf die jeweiligen Diagramme, Graphen, Diagramm-Strukturen oder Graphen-Strukturen der ersten und zweiten Datenstruktur angewendet wurde oder wird,
oder, dass im Rahmen eines Vergleichens der ersten (159) und zweiten Datenstruktur (259) gemäß Verfahrensschritt d.) jeweils ein Clustering-Verfahren auf die jeweiligen Diagramme, Graphen, Diagramm-Strukturen oder Graphen-Strukturen der ersten und zweiten Datenstruktur angewendet wird.

6. Verfahren nach einem der vorhergehenden Ansprüche,
**dadurch gekennzeichnet,**
**dass** das Verfahren zur Überwachung eines Verfahrensablaufs oder Produktionsablaufs derart ausgebildet und eingerichtet ist,
- **dass** das Erfassen des ersten (134) beziehungsweise zweiten Bildes (234) als Erfassen eines ersten beziehungsweise zweiten Bildes eines Gegenstandes (132, 232) bezüglich des Produktionsablaufs oder einer Situation (130) bezüglich des Produktionsablaufs ausgebildet und eingerichtet ist, und
- **dass** das Erfassen des mindestens einen ersten beziehungsweise zweiten skalaren Sensorwerts (129, 229) als Erfassen mindestens eines ersten beziehungsweise mindestens eines zweiten skalaren Sensorwerts (129, 229) betreffend den Gegenstand bezüglich des Produktionsablaufs oder die Situation (130) bezüglich des Produktionsablaufs ausgebildet und eingerichtet ist.

7. Verfahren gemäß Anspruch 6,
**dadurch gekennzeichnet,**
**dass** der Produktionsablauf zur Herstellung eines Produkts ausgebildet und eingerichtet ist und eine Abfolge von Produktionsschritten umfasst, wobei nach dem Ablauf eines ausgewählten Produktionsschritts (110, 120, 130) aus der Abfolge von Produktionsschritten ein Zwischenprodukt (132, 232) vorliegt,
- und **dass** weiterhin das erste Bild (134) als ein erstes Zwischenprodukt-Bild (134) ausgebildet und eingerichtet ist,
- der mindestens eine erste skalare Sensorwert (129) sich auf den ausgewählten Produktionsschritt (110, 120, 130) bezieht,
- das zweite Bild (234) als ein zweites Zwischenprodukt-Bild (234) ausgebildet und eingerichtet ist, und
- der mindestens eine zweite skalare Sensorwert (229) sich auf den ausgewählten Produktionsschritt (110, 120, 130) bezieht.

8. Verfahren nach einem der Ansprüche 6 oder 7,
**dadurch gekennzeichnet,**
**dass** innerhalb Verfahrensschritt c.) der erste Datensatz (159) unter Verwendung mindestens eines weiteren ersten Produktionsparameter-Wertes (119),
und der zweite Datensatz (259) unter Verwendung mindestens eines weiteren zweiten Produktionsparameter-Wertes (129) erstellt wird.

9. Verfahren nach einem der Ansprüche 1 bis 5,
**dadurch gekennzeichnet,**
**dass** das Verfahren zur Überwachung der Bewegung eines Fahrzeugs derart ausgebildet und eingerichtet ist,
- **dass** das Erfassen des ersten (134) beziehungsweise zweiten Bildes (234) als Erfassen eines ersten (134) beziehungsweise zweiten Bildes (234) eines Umgebungsausschnitts des Fahrzeugs ausgebildet und eingerichtet ist, und
- **dass** das Erfassen des mindestens einen ersten (129) beziehungsweise zweiten Sensorwerts (229) als Erfassen mindestens eines ersten (129) beziehungsweise mindestens eines zweiten Sensorwerts (229) bezüglich des Fahrzeugs oder einer Umgebung des Fahrzeugs ausgebildet und eingerichtet ist.

10. Verfahren nach einem der Ansprüche 1 bis 5,
**dadurch gekennzeichnet,**
**dass** das Verfahren zur Analyse eines Bildes (134, 234) eines Gegenstands (132, 232) oder Lebewesens derart ausgebildet und eingerichtet ist,
- **dass** das Erfassen des ersten (134) beziehungsweise zweiten Bildes (234) als Erfassen eines ersten (134) beziehungsweise zweiten Bildes (234) des Lebewesens oder Gegenstands (132, 232), oder jeweils eines Bereichs davon, ausgebildet und eingerichtet ist, und
- **dass** das Erfassen des mindestens einen ersten (129) beziehungsweise zweiten Sensorwerts (229) als Erfassen mindestens eines ersten (129) beziehungsweise mindestens eines zweiten Sensorwerts (229) bezüglich des Lebewesens oder Gegenstands (132, 232), oder jeweils des Bereichs davon, ausgebildet und eingerichtet ist.

11. Verfahren zur Analyse von akustischen Informationen mit zugeordneten skalaren Werten, umfassend die Verfahrensschritte,
a.) Erfassen einer ersten akustischen Information bezüglich einer akustischen Quelle und Erfassen mindestens eines ersten skalaren Sensorwerts bezüglich der akustischen Quelle,
b.) Erfassen einer zweiten akustischen Information bezüglich der akustischen Quelle oder einer zweiten akustischen Quelle und Erfassen mindestens eines zweiten skalaren Sensorwerts bezüglich der akustischen Quelle oder der zweiten akustischen Quelle,
c.) Transformieren des ersten akustischen Datensatzes in den Frequenzraum und Einbringen dieses frequenztransformierten ersten akustischen Datensatzes sowie des mindestens einen ersten skalaren Sensorwerts als konsistente Repräsentationsform in eine erste Datenstruktur (159), und
Transformieren des zweiten akustischen Datensatzes in den Frequenzraum und Einbringen dieses frequenztransformierten zweiten akustischen Datensatzes sowie des mindestens einen zweiten skalaren Sensorwerts als konsistente Repräsentationsform in eine zweite Datenstruktur (259), wobei die erste (159) und zweite Datenstruktur (259) jeweils eine zwei- oder höherdimensionale Diagramm-Struktur oder eine zwei- oder höherdimensionale Graphen-Struktur aufweist oder jeweils als ein zwei- oder höherdimensionales Diagramm oder einen zwei- oder höherdimensionalen Graph dargestellt oder darstellbar ist,
d.) Vergleichen der ersten und zweiten Datenstruktur, und
e.) Ausgabe einer Information, wenn der Vergleich einen Unterschied ergibt, der einem vorgegebenen oder vorgebbaren Kriterium entspricht.

12. Verfahren gemäß Anspruch 11,
**dadurch gekennzeichnet,**
**dass** das Verfahren weiterhin gemäß den Merkmalen von einem oder mehreren der Ansprüche 3 bis 5 ausgebildet und eingerichtet ist.

13. Verfahren nach einem der Ansprüche 11 oder 12,
**dadurch gekennzeichnet,**
**dass** das Verfahren zur Überwachung eines Verfahrensablaufs (110, 120, 130) oder Produktionsablaufs (110, 120, 130) derart ausgebildet und eingerichtet ist,
- **dass** das Erfassen der ersten beziehungsweise zweiten akustischen Information als akustische Aufnahme betreffend eines in den Produktionsablauf involvierten Gegenstands oder einer Situation bezüglich des Produktions- oder Verfahrensablaufs ausgebildet und eingerichtet ist, und
- **dass** das Erfassen des mindestens einen ersten beziehungsweise zweiten skalaren Sensorwerts als Erfassen mindestens eines Werts vermittels eines Sensors betreffend den in den Produktionsablauf involvierten Gegenstand oder die Situation bezüglich des Produktions- oder Verfahrensablaufs ausgebildet und eingerichtet ist.

## Claims

1. Method for analysing image information (134, 234) using assigned scalar values (119, 129, 219, 229), comprising the method steps of
a.) capturing a first image (134) of an object (132, 232) or a situation (130) and capturing at least one first scalar sensor value (129) relating to the object (132) or the situation (130),
b.) capturing a second image (234) of the object (132, 232) or the situation (130) and capturing at least one second scalar sensor value (229) relating to the object (132, 232) or the situation (130),
c.) inserting the first image (134) and the at least one first scalar sensor value (129) as a consistent representational form into a first data structure (159), and inserting the second image (234) and the at least one second scalar sensor value (229) as a consistent representational form into a second data structure (259), wherein the first data structure (159) and the second data structure (259) each have a two-dimensional or higher-dimensional diagram structure or a two-dimensional or higher-dimensional graph structure or are each represented or can be represented as a two-dimensional or higher-dimensional diagram or a two-dimensional or higher-dimensional graph,
d.) comparing the first data structure (159) and the second data structure (259), and
e.) outputting an item of information if the comparison reveals a difference corresponding to a predefined or predefinable criterion.

2. Method according to Claim 1,
**characterized**
**in that**, in order to create the first data structure (159) and the second data structure (259), the respectively captured image (134, 234) is respectively transformed to the frequency domain, in particular in that, in order to create the first data structure (159) and the second data structure (259), the respectively captured image (134, 234) is respectively transformed to the frequency domain using a Fourier analysis method.

3. Method according to Claim 1 or 2,
**characterized**
**in that** at least one first scalar parameter value (119) relating to the object (132, 232) or situation (130) is also captured within method step a.), and
**in that** at least one second scalar parameter value (219) relating to the object or situation (130) is also captured within method step b.),
wherein the first data structure (159) and the second data structure (259) are also created using the at least one first scalar parameter value (119) and the at least one second parameter value (219).

4. Method according to one of the preceding claims,
**characterized**
**in that** the first data structure (159) and the second data structure (259) are compared using a neural network (600).

5. Method according to one of the preceding claims,
**characterized**
**in that**, when creating the first data structure (159) and the second data structure (259) according to method step c.), a clustering method has been or is respectively applied to the respective diagrams, graphs, diagram structures or graph structures of the first and second data structures,
or in that, when comparing the first data structure (159) and the second data structure (259) according to method step d.), a clustering method is respectively applied to the respective diagrams, graphs, diagram structures or graph structures of the first and second data structures.

6. Method according to one of the preceding claims,
**characterized**
**in that** the method is designed and configured to monitor a method sequence or production sequence in such a manner
- that the capture of the first image (134) and of the second image (234) is designed and configured as the capture of a first and a second image of an object (132, 232) relating to the production sequence or a situation (130) relating to the production sequence, and
- that the capture of the at least one first and second scalar sensor value (129, 229) is designed and configured as the capture of at least one first and at least one second scalar sensor value (129, 229) relating to the object relating to the production sequence or the situation (130) relating to the production sequence.

7. Method according to Claim 6,
**characterized**
**in that** the production sequence is designed and configured to produce a product and comprises a sequence of production steps, wherein there is an intermediate product (132, 232) after a selected production step (110, 120, 130) from the sequence of production steps has been carried out,
- and **in that** the first image (134) is also designed and configured as a first intermediate product image (134),
- the at least one first scalar sensor value (129) relates to the selected production step (110, 120, 130),
- the second image (234) is designed and configured as a second intermediate product image (234), and
- the at least one second scalar sensor value (229) relates to the selected production step (110, 120, 130).

8. Method according to either of Claims 6 and 7,
**characterized**
**in that**, within method step c.), the first data set (159) is created using at least one further first production parameter value (119),
and the second data set (259) is created using at least one further second production parameter value (129).

9. Method according to one of Claims 1 to 5,
**characterized**
**in that** the method is designed and configured to monitor the movement of a vehicle in such a manner
- that the capture of the first image (134) and of the second image (234) is designed and configured as the capture of a first image (134) and a second image (234) of an environment detail of the vehicle, and
- that the capture of the at least one first sensor value (129) and of the at least one second sensor value (229) is designed and configured as the capture of at least one first sensor value (129) and at least one second sensor value (229) relating to the vehicle or an environment of the vehicle.

10. Method according to one of Claims 1 to 5,
**characterized**
**in that** the method is designed and configured to analyse an image (134, 234) of an object (132, 232) or a living being in such a manner
- that the capture of the first image (134) and of the second image (234) is designed and configured as the capture of a first image (134) and a second image (234) of the living being or object (132, 232) or an area thereof in each case, and
- that the capture of the at least one first sensor value (129) and of the at least one second sensor value (229) is designed and configured as the capture of at least one first sensor value (129) and at least one second sensor value (229) relating to the living being or object (132, 232) or the area thereof in each case.

11. Method for analysing acoustic information using assigned scalar values, comprising the method steps of
a.) capturing a first item of acoustic information relating to an acoustic source and capturing at least one first scalar sensor value relating to the acoustic source,
b.) capturing a second item of acoustic information relating to the acoustic source or a second acoustic source and capturing at least one second scalar sensor value relating to the acoustic source or the second acoustic source,
c.) transforming the first acoustic data set to the frequency domain and inserting this frequency-transformed first acoustic data set and the at least one first scalar sensor value as a consistent representational form into a first data structure (159), and
transforming the second acoustic data set to the frequency domain and inserting this frequency-transformed second acoustic data set and the at least one second scalar sensor value as a consistent representational form into a second data structure (259), wherein the first data structure (159) and the second data structure (259) each have a two-dimensional or higher-dimensional diagram structure or a two-dimensional or higher-dimensional graph structure or are each represented or can be represented as a two-dimensional or higher-dimensional diagram or a two-dimensional or higher-dimensional graph,
d.) comparing the first data structure and the second data structure, and
e.) outputting an item of information if the comparison reveals a difference corresponding to a predefined or predefinable criterion.

12. Method according to Claim 11,
**characterized**
**in that** the method is also designed and configured according to the features of one or more of Claims 3 to 5.

13. Method according to either of Claims 11 and 12,
**characterized**
**in that** the method is designed and configured to monitor a method sequence (110, 120, 130) or production sequence (110, 120, 130) in such a manner
- that the capture of the first and second acoustic information is designed and configured as an acoustic recording relating to an object involved in the production sequence or a situation relating to the production or method sequence, and
- that the capture of the at least one first and second scalar sensor value is designed and configured as the capture of at least one value by means of a sensor relating to the object involved in the production sequence or the situation relating to the production or method sequence.

## Revendications

1. Procédé d'analyse des informations d'image (134, 234) avec des valeurs scalaires associées (119, 129, 219, 229), comprenant les étapes de procédé,
a.) d'acquisition d'une première image (134) d'un objet (132, 232) ou d'une situation (130) et d'acquisition d'au moins une première valeur de capteur scalaire (129) relative à l'objet (132) ou à la situation (130),
b.) d'acquisition d'une deuxième image (234) de l'objet (132, 232) ou de la situation (130) et d'acquisition d'au moins une deuxième valeur de capteur scalaire (229) relative à l'objet (132, 232) ou à la situation (130),
c.) d'incorporation de la première image (134) et de l'au moins une première valeur de capteur scalaire (129) sous forme de représentation cohérente dans une première structure de données (159), et d'incorporation de la deuxième image (234) et de l'au moins une deuxième valeur de capteur scalaire (229) sous forme de représentation cohérente dans une deuxième structure de données (259), dans lequel la première (159) et la deuxième structure de données (259) présentent chacune une structure de diagramme à deux dimensions ou plus ou une structure de graphique à deux dimensions ou plus ou sont chacune représentées ou représentables sous forme de diagramme à deux dimensions ou plus ou de graphique à deux dimensions ou plus,
d.) de comparaison de la première (159) et la deuxième structure de données (259), et
e.) de sortie d'informations si la comparaison aboutit à une différence correspondant à un critère donné ou spécifiable.

2. Procédé selon la revendication 1,
**caractérisé en ce que**,
pour créer la première (159) et la deuxième structure de données (259), l'image respectivement acquise (134, 234) est transformée dans le domaine fréquentiel,
en particulier, pour créer la première (159) et la deuxième structure de données (259), l'image respectivement acquise (134, 234) est respectivement transformée dans le domaine fréquentiel à l'aide d'un procédé d'analyse de Fourier.

3. Procédé selon la revendication 1 ou 2,
**caractérisé en ce que**,
dans l'étape a.) du procédé, au moins une première valeur de paramètre scalaire (119) relative à l'objet (132, 232) ou à la situation (130) est en outre acquise, et
dans l'étape b.) du procédé, au moins une deuxième valeur de paramètre scalaire (219) est en outre acquise par rapport à l'objet ou à la situation (130),
dans lequel la première (159) et la deuxième structure de données (259) sont en outre créées à l'aide de l'au moins une première valeur de paramètre scalaire (119) respectivement de l'au moins une deuxième valeur de paramètre (219).

4. Procédé selon l'une des revendications précédentes,
**caractérisé en ce que**
la comparaison de la première (159) et de la deuxième structure de données (259) est effectuée à l'aide d'un réseau neuronal (600).

5. Procédé selon l'une des revendications précédentes,
**caractérisé en ce que**
dans le cadre d'une création de la première (159) et de la deuxième structure de données (259) selon l'étape de procédé c.), un procédé de clustering a été ou est appliqué aux diagrammes, aux graphiques, aux structures de diagramme ou aux structures de graphique respectifs de la première et de la deuxième structure de données,
ou, dans le cadre d'une comparaison de la première (159) et de la deuxième structure de données (259) selon l'étape de procédé d.), un procédé de clustering est appliqué aux diagrammes, graphiques, structures de diagramme ou structures de graphique respectifs de la première et de la deuxième structure de données.

6. Procédé selon l'une des revendications précédentes, **caractérisé en ce que**
le procédé de surveillance d'un déroulement de procédé ou d'un déroulement de production est conçu et agencé de sorte que
- l'acquisition de la première (134) respectivement de la deuxième image (234) est conçue et agencée comme l'acquisition d'une première respectivement d'une deuxième image d'un objet (132, 232) relatif au déroulement de production ou d'une situation (130) relative au déroulement de production, et
- l'acquisition de l'au moins une première respectivement de l'au moins une deuxième valeur de capteur scalaire (129, 229) est conçue et agencée comme acquisition d'au moins une première respectivement d'au moins une deuxième valeur de capteur scalaire (129, 229) relative à l'objet par rapport au déroulement de production ou à la situation (130) par rapport au déroulement de production.

7. Procédé selon la revendication 6,
**caractérisé en ce que**
le déroulement de production est conçu et agencé pour fabriquer un produit et comprend une séquence d'étapes de production, dans lequel, après l'achèvement d'une étape de production sélectionnée (110, 120, 130) de la séquence d'étapes de production, un produit intermédiaire (132, 232) est présent,
- et en outre que la première image (134) est conçue et agencée comme une première image de produit intermédiaire (134),
- l'au moins une première valeur de capteur scalaire (129) se rapporte à l'étape de production sélectionnée (110, 120, 130),
- la deuxième image (234) est conçue et agencée comme une deuxième image de produit intermédiaire (234), et
- l'au moins une deuxième valeur de capteur scalaire (229) se rapporte à l'étape de production sélectionnée (110, 120, 130).

8. Procédé selon l'une des revendications 6 ou 7,
**caractérisé en ce que**,
dans l'étape c.) du procédé, le premier ensemble de données (159) est créé à l'aide d'au moins une autre première valeur de paramètre de production (119),
et le deuxième ensemble de données (259) est créé à l'aide d'au moins une autre deuxième valeur de paramètre de production (129).

9. Procédé selon l'une des revendications 1 à 5,
**caractérisé en ce que**
le procédé de surveillance du mouvement d'un véhicule est conçu et agencé de sorte que
- l'acquisition de la première (134) respectivement de la deuxième image (234) est conçue et agencée comme l'acquisition d'une première (134) respectivement d'une deuxième image (234) d'une section de l'environnement du véhicule, et
- l'acquisition de l'au moins une première (129) respectivement de l'au moins une deuxième valeur de capteur (229) est conçue et agencée comme acquisition d'au moins une première (129) respectivement d'au moins une deuxième valeur de capteur (229) par rapport au véhicule ou à un environnement du véhicule.

10. Procédé selon l'une des revendications 1 à 5,
**caractérisé en ce que**
le procédé d'analyse d'une image (134, 234) d'un objet (132, 232) ou d'un être vivant est conçu et agencé de sorte que
- l'acquisition de la première (134) respectivement de la deuxième image (234) est conçue et agencée comme l'acquisition d'une première (134) respectivement d'une deuxième image (234) de l'être vivant ou de l'objet (132, 232), ou dans chaque cas d'une région de celui-ci, et
- l'acquisition de l'au moins une première (129) respectivement de l'au moins une deuxième valeur de capteur (229) est conçue et agencée comme acquisition d'au moins une première (129) respectivement d'au moins une deuxième valeur de capteur (229) par rapport à l'être vivant ou à l'objet (132, 232), ou dans chaque cas à la région de celui-ci.

11. Procédé d'analyse d'informations acoustiques avec valeurs scalaires associées, comprenant les étapes de procédé
a.) d'acquisition d'une première information acoustique relative à une source acoustique et d'acquisition d'au moins une première valeur de capteur scalaire relative à la source acoustique,
b.) d'acquisition d'une deuxième information acoustique relative à la source acoustique ou à une deuxième source acoustique et d'acquisition d'au moins une deuxième valeur de capteur scalaire relative à la source acoustique ou à la deuxième source acoustique,
c.) de transformation du premier ensemble de données acoustiques dans le domaine fréquentiel et d'incorporation de ce premier ensemble de données acoustiques transformé en fréquence et de l'au moins une première valeur de capteur scalaire comme forme de représentation cohérente dans une première structure de données (159), et de transformation du deuxième ensemble de données acoustiques dans le domaine fréquentiel et d'incorporation de ce deuxième ensemble de données acoustiques transformé en fréquence et de l'au moins une deuxième valeur de capteur scalaire comme forme de représentation cohérente dans une deuxième structure de données (259), dans lequel les première (159) et deuxième structures de données (259) présentent chacune une structure de diagramme à deux dimensions ou plus ou une structure de graphique à deux dimensions ou plus ou sont chacune représentées ou représentables comme un diagramme à deux dimensions ou plus ou un graphique à deux dimensions ou plus,
d.) de comparaison des première et deuxième structures de données, et
e.) de sortie d'une information si la comparaison aboutit à une différence correspondant à un critère donné ou spécifiable.

12. Procédé selon la revendication 11,
**caractérisé en ce que**
le procédé est en outre conçu et agencé selon les caractéristiques d'une ou de plusieurs des revendications 3 à 5.

13. Procédé selon l'une des revendications 11 ou 12,
**caractérisé en ce que**
le procédé de surveillance d'un déroulement de procédé (110, 120, 130) ou d'un déroulement de production (110, 120, 130) est conçu et agencé de sorte que
- l'acquisition de la première respectivement de la deuxième information acoustique est conçue et agencée comme un enregistrement acoustique relatif à un objet impliqué dans le déroulement de production ou à une situation relative au déroulement de production ou de procédé, et
- l'acquisition de l'au moins une première respectivement deuxième valeur de capteur scalaire est conçue et agencée comme acquisition d'au moins une valeur au moyen d'un capteur relative à l'objet impliqué dans le déroulement de production ou à la situation relative au déroulement de production ou de procédé.
